(19) Europäisches Patentamt
European Patent Office
Office européen des brevets

(11) **EP 4 542 989 A1**

(12) **EUROPEAN PATENT APPLICATION**
published in accordance with Art. 153(4) EPC

(43) Date of publication:
**23.04.2025 Bulletin 2025/17**

(21) Application number: **22946301.3**

(22) Date of filing: **17.06.2022**

(51) International Patent Classification (IPC):
**H04N 19/117** (2014.01)

(52) Cooperative Patent Classification (CPC):
**H04N 19/117**

(86) International application number:
**PCT/CN2022/099527**

(87) International publication number:
**WO 2023/240618 (21.12.2023 Gazette 2023/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **DAI, Zhenyu
Dongguan, Guangdong 523860 (CN)**

(74) Representative: **RGTH
Patentanwälte PartGmbB
Neuer Wall 10
20354 Hamburg (DE)**

(54) **FILTER METHOD, DECODER, ENCODER, AND COMPUTER-READABLE STORAGE MEDIUM**

(57) The embodiments of the present disclosure provide a filtering method, a decoder, an encoder and a computer-readable storage medium, which may improve accuracy of coding and decoding. The method includes: parsing a bitstream, to determine a frame-level scaling factor and an initial residual of a current block, where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not comprise block-level scaling factor(s) corresponding to difference block(s), and each difference block is a block having a difference with other blocks in the current frame; performing picture block reconstruction and filtering based on the initial residual, to determine a first reconstructed picture block and a first filtered picture block; and performing scaling processing by using the frame-level scaling factor, the first reconstructed picture block and the first filtered picture block, to obtain a refined picture block corresponding to the current block.

Picture reconstruction and filtering is performed based on an initial residual of each block in a current frame, to determine a second reconstructed picture block and a second filtered picture block corresponding to each block — S101

Scaling factor calculation is performed based on the second reconstructed picture block and the second filtered picture block, to determine a block-level scaling factor corresponding to each block — S102

Screening is performed on block-level scaling factors corresponding to all blocks in the current frame, to determine a first frame-level scaling factor; where the first frame-level scaling factor does not include block-level scaling factor(s) corresponding to difference block(s), and each difference block is a block having a difference with other blocks in the current frame — S103

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block — S104

A frame-level scaling factor is determined based on the first frame-level scaling factor and the second frame-level scaling factor — S105

FIG. 8

**Description**

TECHNICAL FIELD

Embodiments of the present disclosure relate to a video coding technology, relate to but are not limited to, a filtering method, a decoder, an encoder and a computer-readable storage medium.

BACKGROUND

At present, in video coding and decoding standards such as versatile video coding (WC), loop filters are used to improve subjective and objective quality of reconstructed pictures. A conventional loop filtering module mainly includes a deblocking filter (DBF), a sample adaptive offset (SAO) and an adaptive loop filter (ALF). With development of deep learning technology, exploration on neural network-based loop filters has gradually carried out.

Generally, for one coded picture frame, a picture-level scaling factor is calculated by traversing all pixels within the current picture, and video encoding is performed based on a block-level (such as a coding tree unit (CTU)) in conjunction with the picture-level scaling factor.

However, the picture-level scaling factor reflects overall scalability of the picture. When there are a few CTU units whose block-level scaling factors have a large gap with scaling factors of other CTU units in the coded picture, a calculated picture-level scaling factor will be affected by the block-level scaling factors of a few CTU units, and produce a large error with scaling factors of most CTU units. In this way, when the picture-level scaling factor is used to perform encoding on the most other CTU units, accuracy of video coding and decoding will be reduced due to the error of the picture-level scaling factor.

SUMMARY

Embodiments of the present disclosure provide a filtering method, a decoder, an encoder and a computer-readable storage medium, which may improve accuracy of coding and decoding.

In a first aspect, the embodiments of the present disclosure provide a filtering method, which is applied to a decoder and includes:

> parsing a bitstream, to determine a frame-level scaling factor and an initial residual of a current block, where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not include block-level scaling factor(s) corresponding to difference block(s), and each difference block is a block having a difference with other blocks in the current frame;
> performing picture block reconstruction and filtering based on the initial residual, to determine a first reconstructed picture block and a first filtered picture block; and
> performing scaling processing by using the frame-level scaling factor, the first reconstructed picture block and the first filtered picture block, to obtain a refined picture block corresponding to the current block.

In a second aspect, the embodiments of the present disclosure further provide a filtering method, which is applied to an encoder and includes:

> performing picture reconstruction and filtering based on an initial residual of each block in a current frame, to determine a second reconstructed picture block and a second filtered picture block corresponding to each block;
> performing scaling factor calculation based on the second reconstructed picture block and the second filtered picture block, to determine a block-level scaling factor corresponding to each block;
> performing screening on block-level scaling factors corresponding to all blocks in the current frame, to determine a first frame-level scaling factor, where the first frame-level scaling factor does not include block-level scaling factor(s) corresponding to difference block(s), and each difference block is a block having a difference with other blocks in the current frame;
> performing scaling factor calculation based on a second reconstructed picture and a second filtered picture corresponding to the current frame, to obtain a second frame-level scaling factor corresponding to the current frame, where the second reconstructed picture is determined by the second reconstructed picture block corresponding to each block, and the second filtered picture is determined by the second filtered picture block corresponding to each block; and
> determining a frame-level scaling factor based on the first frame-level scaling factor and the second frame-level scaling factor.

In a third aspect, the embodiments of the present disclosure provide a decoder, which includes:

a parsing portion, configured to parse a bitstream, to determine a frame-level scaling factor and an initial residual of a current block; where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not include block-level scaling factor(s) corresponding to difference block(s), and each difference block is a block having a difference with other blocks in the current frame;

a first reconstruction and filtering portion, configured to perform picture block reconstruction and filtering based on the initial residual, to determine a first reconstructed picture block and a first filtered picture block; and

a first determination portion, configured to perform scaling processing by using the frame-level scaling factor, the first reconstructed picture block and the first filtered picture block, to obtain a refined picture block corresponding to the current block.

In a fourth aspect, the embodiments of the present disclosure provide an encoder, which includes:

a second reconstruction and filtering portion, configured to perform picture reconstruction and filtering based on an initial residual of each block in a current frame, to determine a second reconstructed picture block and a second filtered picture block corresponding to each block; and

a second determination portion, configured to perform scaling factor calculation based on the second reconstructed picture block and the second filtered picture block, to determine a block-level scaling factor corresponding to each block; perform screening on block-level scaling factors corresponding to all blocks in the current frame, to determine a first frame-level scaling factor, where the first frame-level scaling factor does not include block-level scaling factor(s) corresponding to difference block(s), and each difference block is a block having a difference with other blocks in the current frame; perform scaling factor calculation based on a second reconstructed picture and a second filtered picture corresponding to the current frame, to obtain a second frame-level scaling factor corresponding to the current frame, where the second reconstructed picture is determined by the second reconstructed picture block corresponding to each block, and the second filtered picture is determined by the second filtered picture block corresponding to each block; and determine a frame-level scaling factor based on the first frame-level scaling factor and the second frame-level scaling factor.

In a fifth aspect, the embodiments of the present disclosure further provide a decoder, which includes:

a first memory and a first processor;

where the first memory is configured to store a computer program executable on the first processor, and the first processor is configured to implement the filtering method of the decoder when executing the computer program.

In a sixth aspect, the embodiments of the present disclosure further provide an encoder, which includes:

a second memory and a second processor;

where the second memory is configured to store a computer program executable on the second processor, and the second processor is configured to implement the filtering method of the encoder when executing the computer program.

The embodiments of the present disclosure provide a computer-readable storage medium, where the computer-readable storage medium stores a computer program. The computer program, when executed by a first processor, implements the filtering method of the decoder in the claims; or the computer program, when executed by a second processor, implements the filtering method of the encoder in the claims.

The embodiments of the present disclosure provide a filtering method, a decoder, an encoder and a computer-readable storage medium. The frame-level scaling factor parsed from the bitstream at the decoder side is determined by the first frame-level scaling factor and the second frame-level scaling factor corresponding to the current frame. The first frame-level scaling factor is obtained by screening the block-level scaling factors in the current frame, and does not include the block-level scaling factor(s) corresponding to the difference block(s). Thus, the error caused by the block-level scaling factor(s) corresponding to the difference block(s) on the calculation of the entire frame-level scaling factor is reduced, so that the calculated first frame-level scaling factor may more accurately characterize the required refined magnitude of most blocks in the current frame, thereby improving the accuracy of the first frame-level scaling factor. Moreover, since the frame-level scaling factor is determined in the first frame-level scaling factor and the second frame-level scaling factor by comparing the two types of frame-level scaling factors, the distortion correction performance of the frame-level scaling factor is further improved, thereby improving the coding performance and the coding accuracy at the encoder side. In this way, by using the frame-level scaling factor, scaling processing is performed on the first reconstructed picture block and the first filtered picture block which are obtained by performing picture block reconstruction and filtering based on the initial residual at the decoder side, to realize decoding filtering of the current block in the current frame and obtain the refined picture block corresponding to the current block, so that the accuracy of the refined picture block is improved, and the decoding performance and the decoding accuracy is further improved.

BRIEF DESCRIPTION OF THE DRAWINGS

FIG. 1 is an application schematic diagram of an encoding framework provided.
FIG. 2 is an application schematic diagram of another encoding framework provided.
FIG. 3 is a network structure diagram in which a loop filter of a multi-layer convolutional network performs filtering and optimizing on an input reconstructed picture provided in the embodiments of the present disclosure.
FIG. 4 is a network structure diagram of a multi-layer residual network based loop filter provided in the embodiments of the present disclosure.
FIG. 5 is an exemplary schematic diagram of partition of a coding unit provided in the embodiments of the present disclosure.
FIG. 6A is a distribution schematic diagram of block-level scaling factors provided in the embodiments of the present disclosure.
FIG. 6B is another distribution schematic diagram of block-level scaling factors provided in the embodiments of the present disclosure.
FIG. 7A is a schematic diagram of a detailed framework of a video encoding system provided in the embodiments of the present disclosure.
FIG. 7B is a schematic diagram of a detailed framework of a video decoding system provided in the embodiments of the present disclosure.
FIG. 8 is an optional flowchart schematic diagram of a filtering method provided in the embodiments of the present disclosure.
FIG. 9 is an optional flowchart schematic diagram of a filtering method provided in the embodiments of the present disclosure.
FIG. 10 is an optional flowchart schematic diagram of a filtering method provided in the embodiments of the present disclosure.
FIG. 11 is an optional flowchart schematic diagram of a filtering method provided in the embodiments of the present disclosure.
FIG. 12 is an optional flowchart schematic diagram of a filtering method provided in the embodiments of the present disclosure.
FIG. 13 is an optional flowchart schematic diagram of a filtering method provided in the embodiments of the present disclosure.
FIG. 14 is an optional flowchart schematic diagram of a filtering method provided in the embodiments of the present disclosure.
FIG. 15 is an exemplary schematic diagram of an encoding framework provided in the embodiments of the present disclosure.
FIG. 16 is an optional flowchart schematic diagram of a filtering method provided in the embodiments of the present disclosure.
FIG. 17 is a first schematic structural diagram of a decoder provided in the embodiments of the present disclosure.
FIG. 18 is a second schematic structural diagram of a decoder provided in the embodiments of the present disclosure.
FIG. 19 is a first schematic structural diagram of an encoder provided in the embodiments of the present disclosure.
FIG. 20 is a second a first schematic structural diagram of an encoder provided in the embodiments of the present disclosure.

DETAILED DESCRIPTION

The technical solutions in the embodiments of the present disclosure will be clearly and completely described below in conjunction with the drawings in the embodiments of the present disclosure. It is to be understood that specific embodiments described herein are merely for the purpose of explaining the related application, and are not intend to limit the present disclosure. It is also to be noted that, for the convenience of description, only parts related to the related application are illustrated in the drawings.

It is to be noted that the "first", "second", "third" and so on mentioned throughout the specification are merely for the purpose of distinguishing different features, and do not have functions such as limiting priority, order of precedence or magnitude relationships.

The nouns and terms involved in the embodiments of the present disclosure are explained and the nouns and terms involved in the embodiments of the present disclosure are applicable to the following explanations:

next generation video coding standard H.266/Versatile Video Coding (WC);
VVC reference software test platform (VVC test model, VTM);
Audio Video Coding Standard (AVS);
high performance test model (High-Performance Model, HPM) of AVS;
high performance-modular artificial intelligence test model (High Performance-Modular Artificial Intelligence Model, HPM-ModAI) of AVS;
Residual based convolutional Neural Network based in-Loop Filter (CNNLF);
DeBlocking Filter (DBF);
Sample Adaptive Offset (SAO);
Adaptive Loop Filter (ALF);
Quantization Parameter (QP);
Coding Unit (CU);
Coding Tree Unit (CTU);
Mean Squared Error (MSE); and
Mean Absolute Error (MAE),

It may be understood that a digital video compression technology is mainly used to compress huge digital image video data for convenience of transmission, storage and so on. With proliferation in Internet videos and people's increasing demand for video definition, although existing digital video compression standards can save a lot of video data, there is still a need to pursue better digital video compression technology to reduce bandwidth and traffic pressure of digital video transmission.

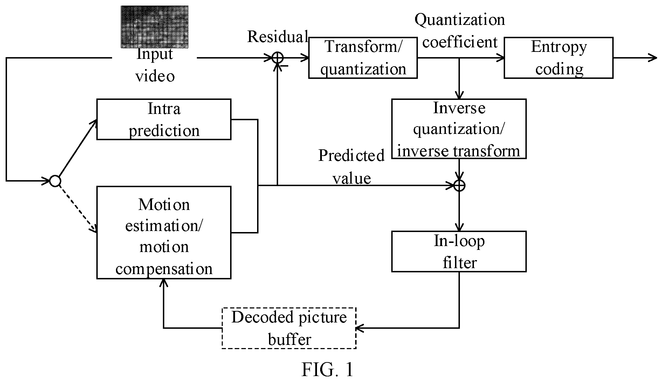

In the digital video encoding process, an encoder reads unequal pixels for original video sequences of different colour formats, including luma components and chroma components, that is, the encoder reads a monochrome picture or colour picture, then the picture is partitioned into blocks and block data is handed over to the encoder for encoding. At present, the encoder usually uses a hybrid frame coding mode, which generally may include operations such as intra prediction and inter prediction, transform/quantization, inverse quantization/inverse transform, loop filtering and entropy coding, and specific processing flows may refer to FIG. 1. The intra prediction only refers to information of the same frame picture, and predicts pixel information within the current partitioned block, which is used to eliminate spatial redundancy. The inter prediction may include motion estimation and motion compensation, and may refer to picture information of different frames, and search motion vector information that best matches the current partitioned block by using motion estimation, to eliminate temporal redundancy. The transform converts a predicted picture block to a frequency domain, redistributes energy, and combines with the quantization to remove information that is not sensitive to the human eye, to eliminate visual redundancy. The entropy coding may eliminate character redundancy based on a current context model and probability information of a binary bitstream. The loop filtering model mainly performs processing on pixels after inverse transform and inverse quantization, to compensate for distortion information and provide a better reference for subsequent coded pixels.

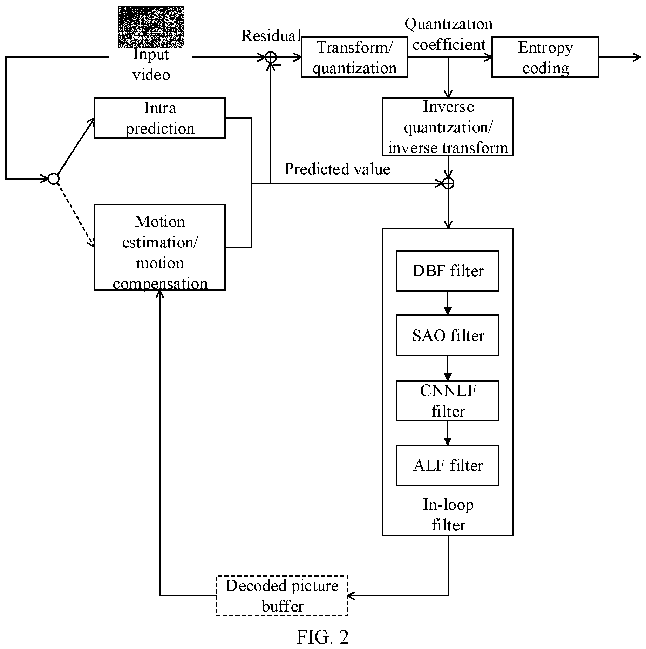

For AVS3, in the loop filtering portion, a conventional loop filtering module mainly includes a deblocking filter (DBF), a sample adaptive offset filter (SAO) and an adaptive loop filter (ALF). In the application of HPM-ModAI, a residual based convolutional neural network based loop filter (CNNLF) is also used as the baseline solution of an intelligent loop filter module and set between SAO filtering and ALF filtering, and details are illustrated in FIG. 2. During the encoding test stage, according to general test conditions of intelligent encoding, for All Intra configuration, ALF is turned on, and DBF and SAO are turned off. For random access and low delay configuration, DBF of I frame is turned on, ALF is turned on and SAO is turned off.

In some embodiments, scenarios in which filtering processing may be performed may be an AVS based reference software test platform HPM or a versatile video coding (VCC) based VVC reference software test platform (WC TEST MODEL, VTM), which is not limited in the embodiments of the present disclosure.

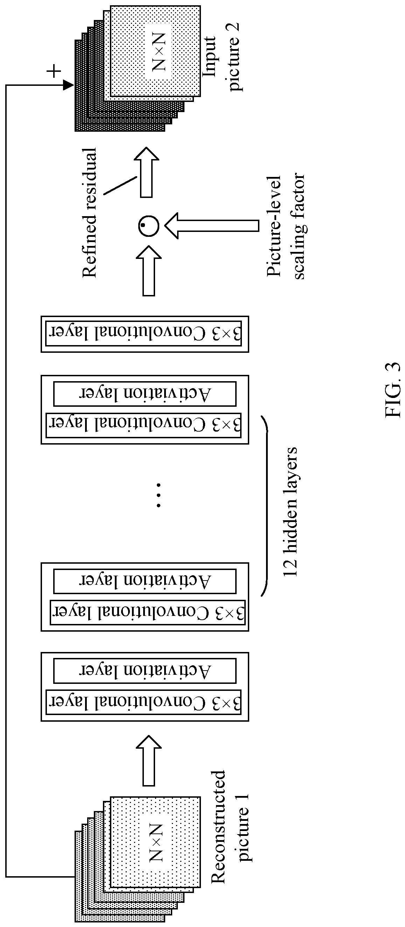

With the development of deep learning technology, the exploration on implementing the above loop filtering module based on the neural network has gradually carried out. The neural network loop filtering tools generally include a loop filter of a multi-layer convolutional network and a loop filter of a multi-layer residual network. In some embodiments, a loop filter of a multi-layer convolutional network structure may be a network model as illustrated in FIG. 3. The network model contains 12 hidden layers and a 3x3 convolutional layer. Each hidden layer consists of a 3x3 convolutional layer and an activation layer (Leaky ReLU), and each convolutional layer contains 96 channels. Input of the network model is a reconstructed picture 1 (a size with NxN) containing 4 luma subblocks (Y) and 2 chroma blocks (U, V). The network model performs filtering and optimizing on the input reconstructed picture 1 through 12 stacked hidden network layers to obtain a filtered picture. Then, a residual between the input reconstructed picture 1 and the filtered picture is refined according to a picture-level scaling factor (SF), and a final output picture 2 (a size with NxN) of the network is obtained according to the refined residual and the reconstructed picture, so that the final output picture 2 is closer to the original picture, which brings better encoding performance.

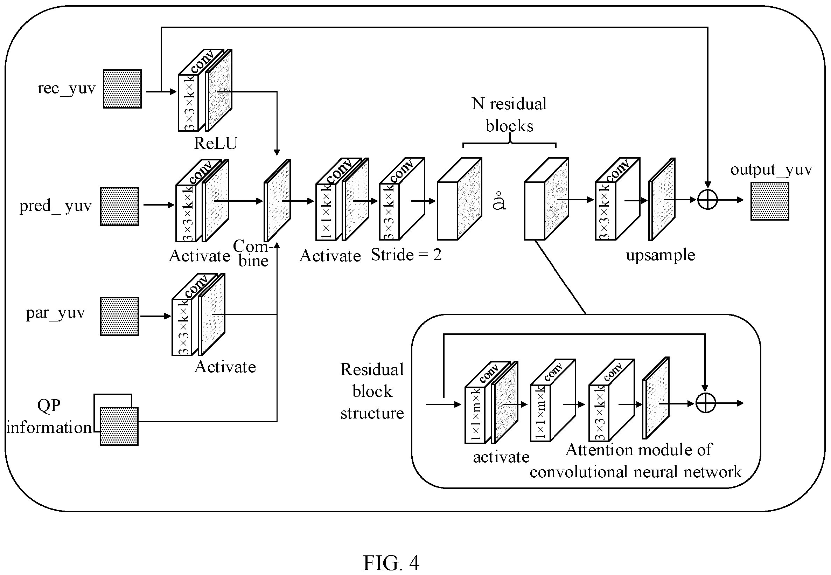

In some embodiments, the loop filter of the multi-layer residual network may be a network model as illustrated in FIG. 4. In addition to a reconstructed picture rec_yuv, input of the network model also includes block partition information par_yuv, prediction information pred_yuv, and QP information. Here, the QP information may include base QP information and slice QP information. The network model combines (cats) the above information, and performs filtering on combined information by the multi-layer residual network, to obtain a filtered picture output_yuv. The network model also performs refinement on a residual between the input reconstructed picture rec_yuv and the filtered picture output_yuv according to the picture-level scaling factor, to obtain a final output picture of the network according to the refined residual and the reconstructed picture.

It can be seen that in the FIG. 3 and FIG. 4, whether it is the loop filter of the multi-layer convolutional network or the loop filter of the multi-layer residual network, there are differences in the network structure and processing method only in the process of obtaining the filtered picture, however, when calculating the scaling factor, the picture-level scaling factor is calculated by directly traversing all corresponding pixels in the reconstructed picture and the filtered picture.

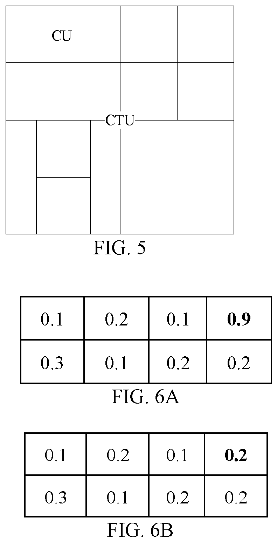

However, in the video encoding process of a current hybrid coding and decoding framework, encoding is performed in units of blocks. Firstly, the encoder reads picture information, and then partitions the picture into several coding tree units (CTUs). One coding tree unit may be further partitioned into several coding units (CUs), these coding units may be rectangular blocks or square blocks, and specific relationships may be referred to FIG. 5. Generally, the encoder performs encoding based on the block-level, such as the CTU unit or the CU unit. Based on the current block-level encoding process, the performance of correction distortion will be better in theory if the block-level scaling factor can be used. However, the use of more block-level scaling factors needs to encode more bits, which reduces bit rate performance. Taking into account the overall performance of bit rate and distortion, the picture-level scaling factor is used in most neural network-based loop filtering tools.

Based on the above content, the picture-level scaling factor is derived by directly traversing all pixels within the picture. It can be seen that when encoding is performed on each CTU unit or each CU unit in the picture, if block-level scaling factors of some CTU units have a large gap with there of other CTU units in the picture, which may produce a large error in the calculation of the picture-level scaling factor.

Exemplarily, as illustrated in FIG. 6A and FIG. 6B, one picture is partition into a 4 X 2 layout with a total of 8 CTU block units. By traversing each CTU unit, the block-level scaling factor of each CTU unit may be obtained, as illustrated in FIG. 6A and FIG. 6B. The picture-level scaling factor may be obtained by traversing each pixel in the entire picture. Here, the picture-level scaling factor of FIG. 6A is 0.26, and the picture-level scaling factor of FIG. 6B is 0.18.

It can be seen that in FIG. 6A, there is a large difference between the block-level scaling factor (0.9) located in the upper-right corner and other block-level scaling factors in FIG. 6A. In this way, although values of the block-level scaling factors of the CTU units other than the upper-right corner in FIG. 6A and FIG. 6B are the same, the calculated picture-level scaling factor in FIG. 6A is still affected by the upper right corner CTU unit and amplified, in which the calculated picture-level scaling factor is amplified by about 150% ((0.26/0.18)*100%), compared to FIG. 6B. Therefore, when calculating the picture-level scaling factor, the calculated picture-level scaling factor may cause a large error due to the differences or particularities of a few blocks, so that the performance of distortion correction for most blocks in the entire picture according to the picture-level scaling factor is reduced, and the accuracy of encoding and decoding is reduced.

The embodiments of the present disclosure provide a filtering method, a decoder, an encoder and a computer-readable storage medium, which may improve the accuracy of video encoding and decoding. Each embodiment of the present disclosure will be described in detail below with reference to the drawings.

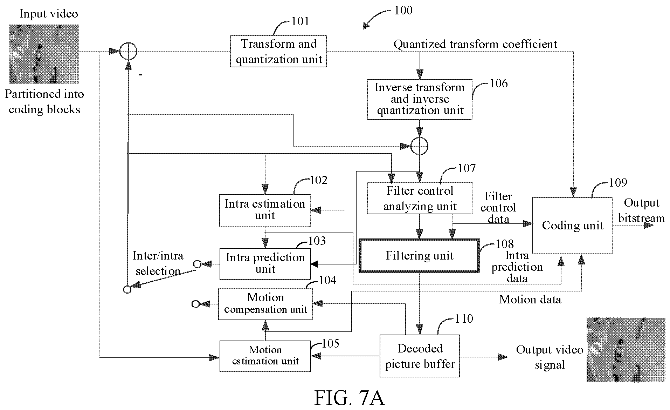

Referring to FIG. 7A, a schematic diagram of a detailed framework of a video encoding system provided in the embodiments of the present disclosure is illustrated. As illustrated in FIG. 7A, the video encoding system 100 includes a transform and quantization unit 101, an intra estimation unit 102, an intra prediction unit 103, a motion compensation unit 104, a motion estimation unit 105, an inverse transform and inverse quantization unit 106, a filter control analyzing unit 107, a filtering unit 108, an encoding unit 109, a decoded picture buffer 110, etc. The filtering unit 108 may implement DBF filtering/SAO filtering/ALF filtering. The encoding unit 109 may implement header information coding and context-based adaptive binary arithmetic coding (CABAC). For an input original video signal, one video coding block may be obtained through coding tree unit (CTU) partitioning. Then, residual pixel information of the video coding block obtained through intra prediction or inter prediction may be transformed using the transform and quantization unit 101, which may include that residual information in a pixel domain is transformed into residual information in a transform domain, and an obtained transform coefficient is quantized to further reduce a bit rate. The intra estimation unit 102 and the intra prediction unit 103 may be configured to perform intra prediction on the video coding block. Specifically, the intra estimation unit 102 and the intra prediction unit 103 may be configured to determine an intra prediction mode to be used to encode the video coding block. The motion compensation unit 104 and the motion estimation unit 105 may be configured to perform inter prediction coding on a received video coding block with respect to one or more blocks in one or more reference pictures to provide time prediction information. Motion estimation performed by the motion estimation unit 105 is a process of generating a motion vector, and the motion vector is used to estimate the motion of the video coding block. Then, the motion compensation unit 104 may perform motion compensation based on the motion vector determined by the motion estimation unit 105. After the intra prediction mode has been determined, the intra prediction unit 103 may further be configured to provide selected intra prediction data to the encoding unit 109. The motion estimation unit 105 may also send computed motion vector data to the encoding unit 109. In addition, the inverse transform and inverse quantization unit 106 may be configured to reconstruct the video coding block, reconstruct a residual block in the pixel domain and provide the reconstructed residual block to the filter control analyzing unit 107 and the filtering unit 108, to remove a blocking artifact, and add the reconstructed residual block to a predictive block in a frame in the decoded picture buffer 110, to produce a reconstructed video coding block. The encoding unit 109 may be configured to encode various coding parameters and quantized transform coefficients. Context content in a CABAC based coding algorithm may be based on a neighboring coding block. The encoding unit 109 may be further configured to encode information indicating the determined intra prediction mode and output a bitstream of the video signal. The decoded picture buffer 110 may be configured to store the reconstructed video coding block for prediction reference. As video picture coding progresses, new reconstructed video coding blocks are generated continuously, these reconstructed video coding blocks may all be stored in the decoded picture buffer 110.

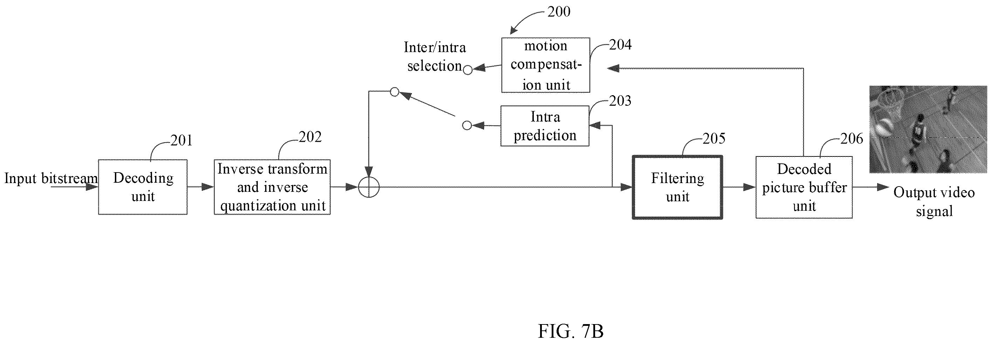

Referring to FIG. 7B, a schematic diagram of a detailed framework of a video decoding system provided in the embodiments of the present disclosure is illustrated. As illustrated in FIG. 7B, the video decoding system 200 includes: a decoding unit 201, an inverse transform and inverse quantization unit 202, an intra prediction unit 203, a motion compensation unit 204, a filtering unit 205, a decoded picture buffer 206, etc. The decoding unit 201 may implement header information decoding and CABAC decoding. The filtering unit 205 may implement DBF filtering/SAO filtering/ALF filtering. After the input video signal has gone through encoding processing illustrated in FIG. 7A, the bitstream of the video signal may be output. The bitstream may be input to the video decoding system 200, and first go through the decoding unit 201 to obtain a decoded transform coefficient. The transform coefficient may be processed by the inverse transform and inverse quantization unit 202, to generate a residual block in the pixel domain. The intra prediction unit 203 may be configured to generate predicted data of the current video coding block based on the determined intra prediction mode and data of a decoded block from the current frame or picture. The motion compensation unit 204 may determine prediction information configured for a video decoding block by analyzing a motion vector and another associated syntax element, and generate a predictive block of the video encoding block being decoded using the prediction information. The residual block from the inverse transform and inverse quantization unit 202 and the corresponding predictive block generated by the intra prediction unit 203 or the motion compensation unit 204 may be summed to form a decoded video block. The decoded video signal may be provided to the filtering unit 205 to remove a blocking artifact, which may improve video quality. Then, the decoded video block may be stored in the decoded picture buffer 206. The decoded picture buffer 206 may store a reference picture configured for subsequent intra prediction or motion compensation, and may also be configured to output the video signal, that is, a recovering original video signal is obtained.

It is to be noted that the method provided in the embodiments of the present disclosure may be applied to the filtering unit 108 part illustrated in FIG. 7A (denoted by a black bold box). That is, the method in the embodiments of the present disclosure may be applied to the video encoding system (referred to as "encoder" for short). It is also to be noted that when the embodiments of the present disclosure are applied to the encoder, the "current block" specifically refers to a block currently to be encoded in the video picture (which may also be referred to as an "encoding block" for short).

Based on this, when the filtering method is performed, filtering processing is performed on the current block, which mainly acts on the filtering unit 108 of the video encoding system 1. The filtering method provided in the embodiments of the present disclosure is implemented by the filtering unit 108.

The embodiments of the present disclosure provide a filtering method, and the method is applied to a video encoding device, i.e., the encoder. The functions implemented by the method may be implemented by a second processor in the video encoding device through calling a program code. The program code may also be stored in a computer-readable storage medium. It can be seen that the video encoding device at least includes the second processor and the second storage medium. The current decoding block and the current encoding block mentioned below are both denoted by the current block.

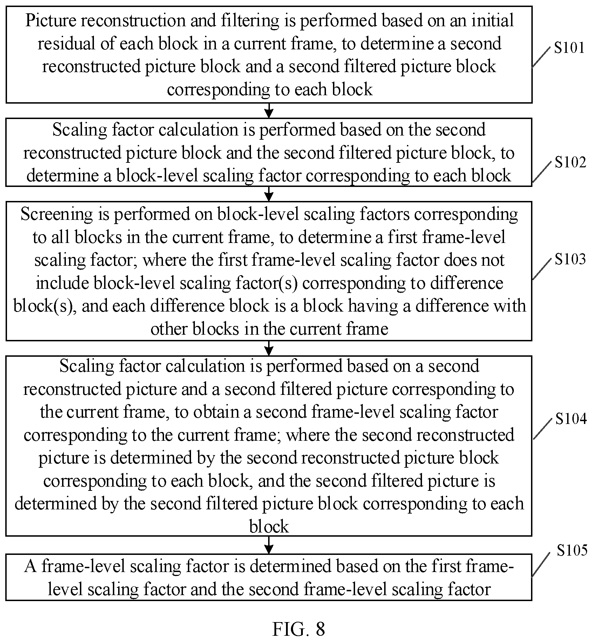

FIG. 8 is an optional flowchart schematic diagram of a filtering method provided in the embodiments of the present disclosure, which is applied to the encoder. The method includes the following.

S101, picture reconstruction and filtering is performed based on an initial residual of each block in a current frame, to determine a second reconstructed picture block and a second filtered picture block corresponding to each block.

In S101, for the encoder, the current frame is an original video frame. The encoder partitions the input original video frame into at least one video coding block, and performs encoding on each block in the at least one video coding block through each block-level encoding process. For the current block in the current frame, the encoder obtains residual pixel information of the current block by intra prediction or inter prediction, and takes as the initial residual. Exemplarily, for the intra prediction, the encoder performs prediction on the current block with reference to adjacent block picture information of the current frame, to obtain a predicted block; and performs residual calculation on the predicted block and the current block(i.e, the original picture block), to obtain the initial residual.

The encoder performs picture reconstruction and filtering on the initial residual of the current block in the current frame, to determine the second reconstructed picture block and the second filtered picture block corresponding to the current block, and continues to perform picture block reconstruction and filtering on a next block in the current frame until processing of the current frame is completed, to obtain the second reconstructed picture block and the second filtered picture block corresponding to each block.

In some embodiments, the operation that the encoder performs picture reconstruction and filtering on the initial residual of the current block in the current frame, to obtain the second reconstructed picture block and the second filtered picture block corresponding to the current block may include that: the encoder performs picture reconstruction on the initial residual of the current block, to obtain the second reconstructed picture block; and performs filtering on the second reconstructed picture block, to obtain the second filtered picture block.

In some embodiments, the operation that the encoder performs picture reconstruction on the initial residual of the current block may include: performing picture reconstruction on the initial residual of the current block, to obtain a second initial reconstructed picture block; performing deblocking filtering on the second initial reconstructed picture block, to obtain a second deblocked picture block; and performing sample adaptive offset filtering on the second deblocked picture block, to obtain the second reconstructed picture block. The encoder may perform filtering on the second reconstructed picture block, to obtain the second filtered picture block corresponding to the current block.

Exemplarily, in the current block-level encoding process, the encoder performs picture reconstruction on the initial residual of the current block to obtain the second initial reconstructed picture block, and takes the second initial reconstructed picture block as input of a filtering unit in the encoder to obtain the second deblocked picture block through a DBF filtering module; and performs SAO filtering on the second deblocked picture block to obtain the second reconstructed picture block. The second reconstructed picture block is taken as the input of a loop filtering module in the filtering unit, and loop filtering is performed on the second reconstructed picture block by using a multi-layer convolutional neural network based loop filtering module or a multi-layer residual neural network based loop filtering module (CNNLF), to obtain the second filtered picture block output by the loop filtering module.

It may be understood that the description of the operation that the encoder performs picture reconstruction and filtering on the initial residual of each block in the current frame is consistent with that of the above operation that picture block reconstruction and filtering is performed on the current block, so that the second reconstructed picture block and the second filtered picture block corresponding to each block in the current frame are obtained.

S102, scaling factor calculation is performed based on the second reconstructed picture block and the second filtered picture block, to determine a block-level scaling factor corresponding to each block.

In S102, the encoder performs scaling factor calculation within a pixel range of each block based on the second reconstructed picture block and the second filtered picture block respectively corresponding to each block in the current frame, to determine the block-level scaling factor corresponding to each block.

In some embodiments, that processes of the encoder performing calculation on the block-level scaling factor includes: a pixel residual calculation process, a block-level residual calculation process and a block-level residual fitting process. In the pixel residual calculation process, for the current block in the current frame, the encoder may perform, in the block-level pixel range corresponding to the current block, residual calculation according to each pixel corresponding to each pixel position in the block-level pixel range respectively in the current block (i.e., the original picture block), the second reconstructed picture block and the second filtered picture block, to obtain an original pixel residual corresponding to each pixel position and representing a difference between an original pixel and a reconstructed pixel, and a filter pixel residual representing a difference between a filtered pixel and a reconstructed pixel. In the block-level residual calculation process, fusing processing is performed on the original pixel residual and the filtered pixel residual of each pixel position within the pixel range of each block, to obtain at least one block-level residual. Exemplarily, processing such as traversing and weighting is performed on the original pixel residual and the filtered pixel residual of each pixel position within the pixel range of each block, to obtain a block-level original pixel residual, a block-level filtered pixel residual, a first block-level weighted residual and a second block-level weighted residual. Here, the first block-level weighted residual and the second block-level weighted residual are obtained by performing different weighting methods on the original pixel residual and the filtered pixel residual of each pixel position within the pixel range of the current block.

In the block-level residual fitting process, the encoder may perform fitting on at least one block-level residual calculated in the block-level residual calculation process, to obtain the block-level scaling factor. Exemplarily, fitting is performed by combining with a preset value range (e.g., including a preset upper limit value and a preset lower limit value) through least squares, to obtain the block-level scaling factor.

It should be noted that in S102, the operation that the encoder calculates the block-level scaling factor corresponding to each block is implemented in the block-level encoding process for the block in the current frame; specifically, implemented in a filtering process of the block-level encoding process for the block. In the current block-level encoding process, the block-level scaling factor corresponding to the current block in the current frame is calculated; a next block-level encoding process is continued and the block-level scaling factor corresponding to the next block in the current frame is calculated until processing of the current frame is completed, to obtain the block-level scaling factor corresponding to each block.

In some embodiments, the operation that the encoder performs scaling factor calculation based on the second reconstructed picture block and the second filtered picture block, to determine the block-level scaling factor corresponding to each block may be as shown in formulas (1) to (7) as follows.

$$orgResi\left(x_i, y_i\right) = \left[org\left(x_i, y_i\right) - rec\left(x_i, y_i\right)\right] \qquad (1)$$

In the formula (1), $(x_i, y_i)$ represents an i-th pixel position in each block, that is, a horizontal coordinate value and a vertical coordinate value of an i-th pixel position in the second reconstructed picture block and the second filtered picture block; $org(x_i, y_i)$ represents a pixel corresponding to the i-th pixel position in each block, which is the original pixel; $rec(x_i, y_i)$ represents a pixel corresponding to the i-th pixel position in the second reconstructed picture block, which is the second reconstructed pixel. The encoder determines, according to the original pixel corresponding to each pixel position in each block through the formula (1), the original pixel residual $orgResi(x_i, y_i)$ between the original pixel corresponding to each pixel position in each block and the second reconstructed pixel of the second reconstructed picture block. That is, the encoder calculates a pixel difference between the original pixel corresponding to each pixel position and the second reconstructed pixel corresponding to the same pixel position, to obtain the original pixel residual.

$$cnnResi\left(x_i, y_i\right) = \left[cnn\left(x_i, y_i\right) - rec\left(x_i, y_i\right)\right] \qquad (2)$$

In formula (2), $cnn(x_i, y_i)$ represents a pixel corresponding to the i-th pixel position in the second filtered picture block, which is the second filtered pixel. The encoder determines, according to the second filtered pixel corresponding to each pixel position in the second filtered picture block through the formula (2), a filtered pixel residual $cnnResi(x_i, y_i)$ between the second reconstructed pixel $rec(x_i, y_i)$ and the second filtered pixel corresponding to each pixel position in the second filtered picture block.

In S102, the encoder may determine the block-level original pixel residual and the block-level filtered pixel residual corresponding to each block based on the original pixel residual and the filtered pixel residual obtained above, as shown in formula (3) and formula (4):

$$sum\_orgResi = \sum_{x_i}^{W_k} \sum_{y_i}^{H_k} orgResi\left(x_i, y_i\right) \qquad (3)$$

$$sum\_cnnResi = \sum_{x_i}^{W_k} \sum_{y_i}^{H_k} cnnResi\left(x_i, y_i\right) \qquad (4)$$

In the formula (3) and formula (4), $W_k$ represents a width value of each block (taking a k-th block as an example), and $H_k$ represents a height value of each block. The encoder may traverse, through the formula (3), the original pixel residual $orgResi(x_i, y_i)$ of each pixel position in each block, to determine the block-level original pixel residual sum_orgResi corresponding to each block; and may traverse, through the formula (4), a filtered pixel residual $cnnResi(x_i, y_i)$ of each pixel position, to determine the block-level filtered pixel residual sum_cnnResi corresponding to each block.

In some embodiments, the encoder performs weighting processing based on the block-level original pixel residual and the block-level filtered pixel residual, to obtain the block-level scaling factor corresponding to each block.

Here, the encoder may preform processing based on the block- level original pixel residual and the block-level filtered pixel residual through a variety of optional weighted and statistical algorithms, to obtain the block-level scaling factor corresponding to each block. The specific selection can be made according to the actual situations and is not limited in the embodiments of the present disclosure. Exemplarily, weighting processing may be implemented by formula (5) to formula (7), to obtain the block-level scaling factor:

$$sum\_cnnMulti = \sum_{x_i}^{W_k} \sum_{y_i}^{H_k} \left( cnnResi(x_i, y_i) * cnnResi(x_i, y_i) \right) \tag{5}$$

The encoder performs, through the formula (5), weighting and fusing on filtered pixel residuals $cnnResi(x_i, y_i)$ corresponding to all pixel positions in each block, to determine a first block-level weighted residual sum_cnnMulti corresponding to each block.

$$sum\_crossMulti = \sum_{x_i}^{W_k} \sum_{y_i}^{H_k} \left( cnnResi(x_i, y_i) * orgResi(x_i, y_i) \right) \tag{6}$$

The encoder performs, through the formula (6), weighting and fusing on original pixel residuals $orgResi(x_i, y_i)$ and filtered pixel residuals $cnnResi(x_i, y_i)$ corresponding to all pixel positions in each block, to determine a second block-level weighted residual sum_crossMulti corresponding to each block.

$$BSF = clip\left( SF_{bottom}, SF_{up}, \frac{W_k * H_k * sum\_crossMulti - sum\_orgResi*sum\_cnnResi}{W_k * H_k * sum\_cnnMulti - sum\_cnnResi*sum\_cnnResi} \right) \tag{7}$$

In the formula (7), $SF_{bottom}$ is a preset lower limit value, and $SF_{up}$ is a preset upper limit value. The encoder performs, in combination with a preset upper limit value and a preset lower limit value through the formula (7), least squares processing on the first block-level weighted residual sum_cnnMulti, the second block-level weighted residual sum _ crossMulti , the block-level original pixel residual sum_orgResi and the block-level filtered pixel residual sum_cnnResi , to obtain the block-level scaling factor *BSF* corresponding to each block.

It is to be noted that, in the embodiments of the present disclosure, each pixel may include a pixel value corresponding to at least one color component. Exemplarily, for a picture that color encoding method is the YUV or YCbCr format, the at least one color component may include: a color component Y characterizing luma (Luma), a blue chroma component and a red chroma component which characterize chroma (Chroma). The blue chroma component is usually represented by a symbol Cb or U, and the red chroma component is usually represented by a symbol Cr or V. U and V are represented as chroma for describing color and saturation.

Thus, in some embodiments, in the above operation that the encoder performs scaling factor calculation based on the second reconstructed picture block and the second filtered picture block to determine the block-level scaling factor corresponding to each block, an original pixel residual and a filtered pixel residual may be calculated on each color component in the at least one color component, respectively, to obtain the respective original pixel residual and the respective filtered pixel residual corresponding to each color component. Then, in all pixel positions within the pixel range of each block, traversing and weighting statistics are performed on respective original pixel residuals and respective filtered pixel residuals corresponding to each color component, to obtain the respective block-level scaling factor corresponding to each color component.

S103, screening is performed on block-level scaling factors corresponding to all blocks in the current frame, to determine a first frame-level scaling factor; where the first frame-level scaling factor does not include block-level scaling factor(s) corresponding to difference block(s), and each difference block is a block having a difference with other blocks in the current frame.

In S103, since the encoder performs filtering on each block in the current frame through the filtering unit in each block-level encoding process until processing of the current frame is completed, when the encoder completes processing on each block in the current frame to obtain the block-level scaling factor corresponding to each block, the encoder performs screening on the scaling factor corresponding to each block (that is, all the block-level scaling factors in the current frame). The encoder determines the block(s) having the difference with others block in the current frame according to the different block-level scaling factors characterizing the difference, and then determines the first frame-level scaling factor based on block-level scaling factors other than the block-level scaling factor(s) corresponding to the difference block(s) among the block-level scaling factors corresponding to the all blocks.

In some embodiments, the encoder may determine the block-level scaling factor(s) corresponding to the difference block(s) from the block-level scaling factors corresponding to the all blocks by boundary value screening, maximum value and minimum value screening or the like, takes the block-level scaling factors other than the block-level scaling factor(s) corresponding to the difference block(s) among the block-level scaling factors corresponding to the all blocks as screened block-level scaling factors, and fusing is performed on the screened block-level scaling factors to obtain the first frame-level scaling factor.

In some embodiments, for the case where the block-level scaling factor includes a respective block-level scaling factor corresponding to each color component, the encoder may performs fusing on the screened block-level scaling factors on each color component, to obtain the respective first frame-level scaling factor corresponding to each color component.

It can be seen that in S103, since the first frame-level scaling factor is calculated through performing screening on the block-level scaling factors corresponding to the all block and using the screened block-level scaling factors that do not include the block-level scaling factor(s) corresponding to the difference block(s), the influence of the difference of a few blocks on the calculation of the first frame-level scaling factor is reduced, the accuracy of the first frame-level scaling factor is improved, and the encoding accuracy is further improved. Moreover, since the first frame-level scaling factor is obtained by performing fusing on the screened block-level scaling factors, there is no need to consume extra coding bits when the first frame-level scaling factor is encoded into the bitstream for transmission, the encoding performance and accuracy are improved while ensuring that the encoding efficiency is not reduced.

S104, scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block.

In S104, when completing filtering processing on each block in the current frame through the filtering unit, the encoder may traverse the second reconstructed picture block corresponding to each block obtained through each block-level encoding process, to obtain the second reconstructed picture corresponding to the current frame; and similarly, the encoder may traverse the second filtered picture block corresponding to each block, to obtain the second filtered picture corresponding to the current frame, that is, a video picture signal outputted by the filtering unit at the encoder side.

Based on the second reconstructed picture and the second filtered picture corresponding to the current frame, the encoder performs, within entire picture (frame-level) range, scaling factor calculation through a pixel corresponding to each pixel position in the current frame, the second reconstructed picture and the second filtered picture, to obtain the second frame-level scaling factor.

In some embodiments, the operation that the encoder calculates the second frame-level scaling factor is similar to the above operation that the encoder calculates the block-level scaling factor, and includes: a pixel residual calculation process, a block-level residual calculation process and a block-level residual fitting process. In the pixel residual calculation process, the encoder may determine, according to an original pixel corresponding to each pixel position in the current frame, an original pixel residual between the original pixel corresponding to each pixel position and a second reconstructed pixel corresponding to the same pixel position in the second reconstructed picture; and determine, according to a second filtered pixel corresponding to each pixel position in the second filtered picture, a filtered pixel residual between the second filtered pixel corresponding to each pixel position in the second filtered picture and the second reconstructed pixel corresponding to the same pixel position. In the block-level residual calculation process, processing such as traversing and weighting is performed on the original pixel residual and the filtered pixel residual of each pixel position within the pixel range of the current frame, to obtain a frame-level original pixel residual, a frame-level filtered pixel residual, a first frame-level weighted residual and a second frame-level weighted residual. Here, the first frame-level weighted residual and the second frame-level weighted residual are obtained by performing different weighting methods on the original pixel residual and the filtered pixel residual of each pixel position within the current frame range.

In some embodiments, since the encoder completes processing on each block in the current frame, obtains the second reconstructed picture based on the second reconstructed picture block corresponding to each block, obtains the second filtered picture based on the second filtered picture block corresponding to each block, and then calculates the second frame-level scaling factor based on the second reconstructed picture and the second filtered picture, the encoder may also directly use the filtered pixel residual and original pixel residual corresponding to each pixel position in each block obtained in the pixel residual calculation process during the block-level scaling factor calculation process of each block, to determine the frame-level original pixel residual and the frame-level filtered pixel residual, so as to reduce the computational effort. Here, the original pixel residual corresponding to each pixel position in the second reconstructed picture may be obtained by traversing the original pixel residual corresponding to each pixel position in the second reconstructed picture block corresponding to each block. The filtered pixel residual corresponding to each pixel position in the second filtered picture may be obtained by traversing the filtered pixel residual corresponding to each pixel position in the second filtered picture block. Then, in the block-level residual fitting process, weighting and fusing are performed on filtered pixel residuals corresponding to all pixel positions in the second filtered picture, to obtain the first frame-level weighted residual; and weighting and fusing are performed on the filtered pixel residuals corresponding to the all pixel positions in the second filtered picture and original pixel residuals corresponding to all pixel positions in the second reconstructed picture, to obtain the second frame-level weighted residual. In combination with a preset upper limit value and a preset lower limit value, least squares processing is performed on the first frame-level weighted residual, the second frame-level weighted residual, the frame-level original pixel residual and the frame-level filtered pixel residual, to obtain the second frame-level scaling factor.

Exemplarily, calculation formulas of the second frame-level scaling factor may be similar to the formulas (1) to (7) above. It is to be noted that, when the second frame-level scaling factor is calculated, $(x_i, y_i)$ in the formulas (1) to (7) represents an i-th pixel position within the pixel range of the current frame, $W_k$ may be $W_m$, and represents a width value of the current frame (taking an m-th frame in the current video stream sequence as an example); and $H_k$ may be $H_m$, and represents a height value of the current frame (taking the m-th frame in the current video stream sequence as an example).

In the embodiments of the present disclosure, the above two methods of calculating the second frame-level scaling factor may be selected according to specific actual situations, which are not limited in the embodiments of the present disclosure.

It is to be noted that, in some embodiments, similar to the operation in S102 that the block-level scaling factor is calculated on at least one color component, the respective original pixel residual and the respective filtered pixel residual corresponding to each color component are obtained on each color component of the at least one color component, and then, in all pixel positions within the pixel range of the current frame, traversing and weighting statistics are performed on respective original pixel residuals and respective filtered pixel residuals corresponding to each color component, to obtain the respective second frame-level scaling factor corresponding to each color component.

S105, a frame-level scaling factor is determined based on the first frame-level scaling factor and the second frame-level scaling factor.

In S105, the first frame-level scaling factor is obtained by performing screening on the scaling factors corresponding to all blocks; the second frame-level scaling factor is obtained by performing scaling factor calculation on pixels within the picture level range. The encoder may compare correction distortion performance based on the first frame-level scaling factor and the second frame-level scaling factor, to determine a scaling factor with better correction distortion performance as the final frame-level scaling factor.

In some embodiments, the correction distortion performance may be compared by means of calculating distortion cost of the first frame-level scaling factor and the second frame-level scaling factor, respectively, or other related indicators may also be used to measure and compare the correction distortion performance of the first frame-level scaling factor and the second frame-level scaling factor. The specific selection is made according to the actual situations, which is not limited in the embodiments of the present disclosure.

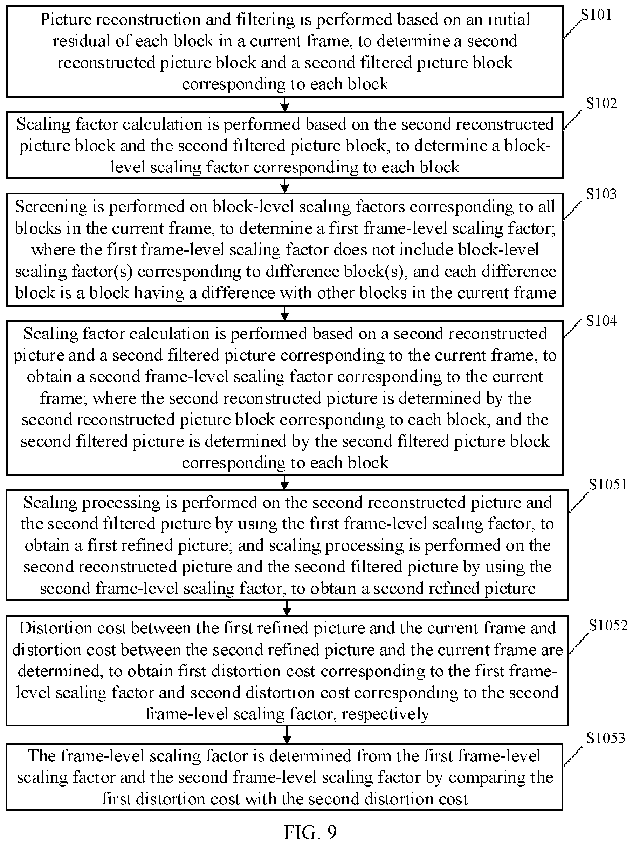

In some embodiments, as illustrated in FIG. 9, the S105 may be implemented by performing 51051-51053, as follows.

S1051, scaling processing is performed on the second reconstructed picture and the second filtered picture by using the first frame-level scaling factor, to obtain a first refined picture; and scaling processing is performed on the second reconstructed picture and the second filtered picture by using the second frame-level scaling factor, to obtain a second refined picture.

In S1051, the encoder may perform scaling processing on the second reconstructed picture and the second filtered picture by respectively using the first frame-level scaling factor and the second frame-level scaling factor, to obtain the first refined picture corresponding to the first frame-level scaling factor and the second refined picture corresponding to the second frame-level scaling factor.

In some embodiments, based on some embodiments in the above S103, the first frame-level scaling factor includes a respective first frame-level scaling factor corresponding to each color component. For the operation of obtaining the first refined picture by using the first frame-level scaling factor, for each pixel position in the second reconstructed picture and the second filtered picture, the encoder may perform, according to the respective first frame-level scaling factor corresponding to each color component, scaling and superposing processing on a first reconstructed pixel of each second reconstructed pixel in the second reconstructed picture on each color component and a second filtered pixel of each second filtered pixel in the second filtered picture on each color component, to obtain a first refined pixel corresponding to each pixel position and containing each color component; and scaling processing is performed on the second reconstructed picture and the second filtered picture by using the first frame-level scaling factor, to obtain the first refined picture.

In some embodiments, the operation that the encoder performs scaling processing on the second reconstructed picture and the second filtered picture by using the first frame-level scaling factor to obtain the first refined picture may be implemented by formula (8) as follows.

$$output_1(x_i, y_i) = rec(x_i, y_i) + RSF*[cnn(x_i, y_i) - rec(x_i, y_i)] \qquad (8)$$

In the formula (8), $RSF$ is the first frame-level scaling factor; $(x_i, y_i)$ represents an i-th pixel position within the pixel range of the current frame; $cnn(x_i, y_i)$ represents a second filtered pixel in the second filtered picture corresponding to the i-th pixel position; and $rec(x_i, y_i)$ represents a second reconstructed pixel in the second reconstructed picture corresponding to the i-th pixel position. The encoder determines, for each pixel position within the pixel range of the current frame through the formula (8), a second pixel residual $cnn(x_i, y_i) - rec(x_i, y_i)$ between the second reconstructed pixel and the second filtered pixel; performs scaling processing on the second pixel residual by using the first frame-level scaling factor $RSF$ and performs superposing processing with the second reconstructed pixel $rec(x_i, y_i)$, to obtain the first refined pixel $output_1$

($x_i$, $y_i$) corresponding to each pixel position; and then traverses the first refined pixel corresponding to each pixel position, to obtain the first refined picture.

In some embodiments, the operation that the encoder performs scaling processing on the second reconstructed picture and the second filtered picture by using the first frame-level scaling factor to obtain the first refined picture may be implemented by formula (9) as follows.

$$output_1\left(x_i, y_i\right) = \left(1 - RSF\right) * rec\left(x_i, y_i\right) + RSF * cnn\left(x_i, y_i\right) \qquad (9)$$

In the formula (9), 1 is a preset coefficient. Exemplarily, in a case where the scaling factor is greater than 0 and less than 1, the value of the preset coefficient is 1. The encoder performs, through the formula (9), scaling processing on the second reconstructed pixel $rec(x_i, y_i)$ by using a difference $(1-RSF)$ between the first frame-level scaling factor and the preset coefficient (1), to obtain a second reconstructed refined pixel $(1 - RSF) * rec(x_i, y_i)$; performs scaling processing on the second filtered pixel $cnn(x_i, y_i)$ by using the first frame-level scaling factor $RSF$, to obtain a second filtered refined pixel $RSF * cnn(x_i, y_i)$; combines the second reconstructed refined pixel and the second filtered refined pixel, to obtain the first refined pixel $output_1 (x_i, y_i)$; and then traverses the first refined pixel corresponding to each pixel position, to obtain the first refined picture.

Here, the description of the operation that the encoder performs scaling processing on the second reconstructed picture and the second filtered picture by using the second frame-level scaling factor to obtain the second refined picture is consistent with that of the above operation that the first refined picture is obtained by using the first frame-level scaling factor, which will not be repeated here.

S1052, distortion cost between the first refined picture and the current frame and distortion cost between the second refined picture and the current frame are determined, to obtain first distortion cost corresponding to the first frame-level scaling factor and second distortion cost corresponding to the second frame-level scaling factor, respectively.

In S1052, the encoder determines the distortion cost between the first refined picture and the current frame, to obtain the first distortion cost corresponding to the first frame-level scaling factor; and the encoder determines the distortion cost between the second refined picture and the current frame, to obtain the second distortion cost corresponding to the second frame-level scaling factor.

In some embodiments, the encoder determines the first distortion cost and the second distortion cost by calculating MSE or MAE of each pixel position, or obtains distortion cost which is used for characterizing an error or a distortion process between the refined picture and the original picture by another error calculation method. The specific selection is made according to the actual situations, which is not limited in the embodiments of the present disclosure.

S1053, the frame-level scaling factor is determined from the first frame-level scaling factor and the second frame-level scaling factor by comparing the first distortion cost with the second distortion cost.

In S1053, the encoder evaluates which of the first frame-level scaling factor and the second frame-level scaling factor corresponds to a higher encoding performance by comparing the first distortion cost with the second distortion cost, so as to determine the frame-level scaling factor from the first frame-level scaling factor and the second frame-level scaling factor.

In some embodiments, if the first distortion cost is less than or equal to the second distortion cost, indicating that the distortion correction performance of the first frame-level scaling factor is higher than or equal to that of the second frame-level scaling factor, the encoder determines the first frame-level scaling factor as the frame-level scaling factor. If the first distortion cost is greater than the second distortion cost, indicating that the distortion correction performance of the second frame-level scaling factor is higher than that of the first frame-level scaling factor, the encoder determines the second frame-level scaling factor as the frame-level scaling factor.

In the embodiments of the present disclosure, after determining the frame-level scaling factor, the encoder will encode the frame-level scaling factor into the bitstream for the decoder to read. In this way, the decoder may parse the current frame and the frame-level scaling factor corresponding to the current frame from the bitstream. In the decoding process of the current frame, residual refinement is performed on the reconstructed picture in the decoding process by the filtering unit at the decoder side according to the frame-level scaling factor.

In some embodiments, after the operation that picture reconstruction and filtering is performed based on the initial residual of each block in the current frame, to determine the second reconstructed picture block and the second filtered picture block corresponding to each block in S101, the encoder may further obtain the second filtered picture corresponding to the current frame based on the second filtered picture block corresponding to each block, that is, by traversing the second filtered picture block corresponding to each block.

Optionally, in some embodiments, the filtering unit may further include an ALF filter. After the operation that picture reconstruction and filtering is performed based on the initial residual of each block in the current frame, to determine the second reconstructed picture block and the second filtered picture block corresponding to each block in S101, the encoder may further perform adaptive filtering on the second filtered picture block corresponding to each block in the filtering process in the encoding process corresponding to each block, to obtain an adaptive filtered picture block corresponding to each block. Adaptive filtering is performed on the second filtered picture block corresponding to the current block, to obtain an adaptive filtered picture block corresponding to the current block, and adaptive filtering is continued to perform on a second filtered picture block corresponding to a next block in the current frame, to obtain an adaptive filtered picture block corresponding to the next block until processing of the current frame is completed, to obtain the adaptive filtered picture block corresponding to each block. In this way, the encoder may traverse the adaptive filtered picture block corresponding to each block, to obtain the second filtered picture corresponding to the current frame.

It is to be understood that in the embodiments of the present disclosure, the second reconstructed picture block and the second filtered picture block corresponding to each block are determined by performing picture reconstruction and filtering based on the initial residual of each block in the current frame; and scaling factor calculation is performed within the picture block range based on the second reconstructed picture block and the second filtered picture block, to determine the block-level scaling factor corresponding to each block. Then, screening is performed on the block-level scaling factors corresponding to the all blocks corresponding to the current frame, to determine the first frame-level scaling factor, so that the first frame-level scaling factor does not include the block-level scaling factor(s) corresponding to the difference block(s), thereby reducing the influence caused by the block-level scaling factor(s) corresponding to the difference block(s) in the current frame on the calculation of the frame-level scaling factor of the entire picture, and improving the accuracy of the first frame-level scaling factor. In the embodiments of the present disclosure, the first frame-level scaling factor is compared with the second frame-level scaling factor calculated within the picture-level range, to determine the frame-level scaling factor from the first frame-level scaling factor and the second frame-level scaling factor, the distortion correction performance of the frame-level scaling factor is improved, so that the encoding performance is improved, and the encoding accuracy is improved ultimately.

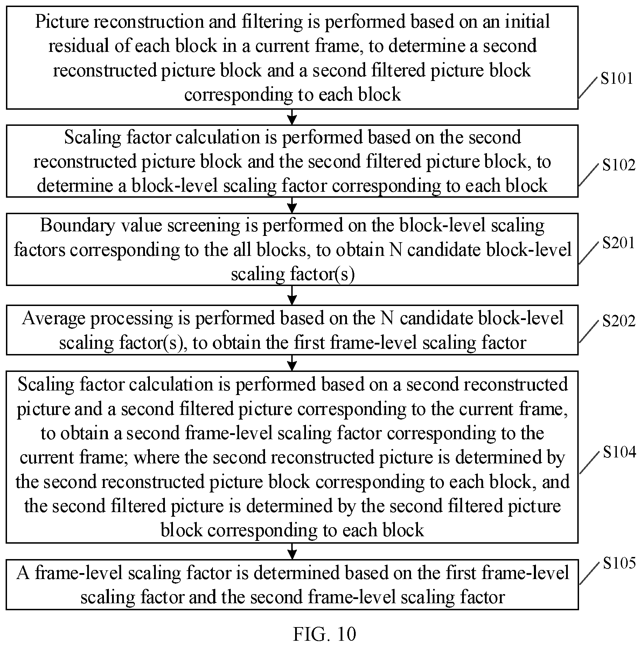

In some embodiments, based on FIG. 8 or FIG. 9, as illustrated in FIG. 10, the above S103 may be implemented by performing S201 to S202, as follows.

S201, boundary value screening is performed on the block-level scaling factors corresponding to the all blocks, to obtain N candidate block-level scaling factor(s).

In S201, N is a positive integer greater than 0. The encoder determines and discards the block-level scaling factor(s) corresponding to the difference block(s) among the block-level scaling factors corresponding to the all blocks by means of boundary value screening, to obtain N candidate block-level scaling factor(s).

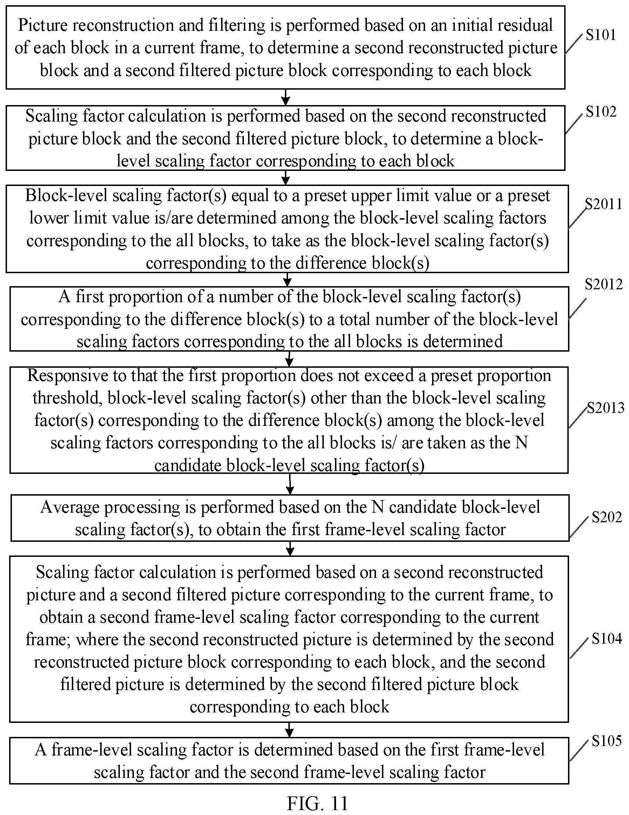

In some embodiments, based on FIG. 10, as illustrated in FIG. 11, the S201 may be implemented through S2011 to S2013, as follows.

S2011, block-level scaling factor(s) equal to a preset upper limit value or a preset lower limit value is/are determined among the block-level scaling factors corresponding to the all blocks, to take as the block-level scaling factor(s) corresponding to the difference block(s).

In S201, based on the above formula (7) for calculating the block-level scaling factor, the block-level scaling factor(s) equal to the preset upper limit value $SF_{up}$ or the preset lower limit value $SF_{bottom}$, calculated by the formula (7), indicates that required refined magnitude of the second reconstructed picture block corresponding to the scaling factor(s) has reached a critical value that can be refined. The encoder determines the block-level scaling factor(s) equal to the preset upper limit value or the preset lower limit value among the block-level scaling factors corresponding to the all blocks, and takes as the block-level scaling factor(s) corresponding to the difference block(s).

S2012, a first proportion of a number of the block-level scaling factor(s) corresponding to the difference block(s) to a total number of the block-level scaling factors corresponding to the all blocks is determined.

S2013, responsive to that the first proportion does not exceed a preset proportion threshold, block-level scaling factor(s) other than the block-level scaling factor(s) corresponding to the difference block(s) among the block-level scaling factors corresponding to the all blocks is/ are taken as the N candidate block-level scaling factor(s).

In S2012 and S2013, the encoder counts the number of the block-level scaling factor(s) corresponding to the difference block(s), and calculates a proportion of the number of the block-level scaling factor(s) corresponding to the difference block(s) to the total number of the block-level scaling factors corresponding to the all blocks (that is, the total number of all block-level scaling factors in the current frame). If the first proportion does not exceed the preset proportion threshold, it is indicated that the proportion of the number of difference block(s) is not high. In order to reduce the influence of the difference block(s) on the calculation of the entire block-level scaling factor, the block-level scaling factor(s) corresponding to the difference block(s) is/are discarded from the block-level scaling factors corresponding to the all blocks, and takes the block-level scaling factor(s) other than the block-level scaling factor(s) corresponding to the difference block(s) as the N candidate block-level scaling factor(s).

In some embodiments, the preset proportion threshold may include a preset upper limit proportion threshold $TH_{up}$ and a first preset lower limit proportion threshold $TH_{bottom}$. The specific selection is made according to the actual situations, which is not limited in the embodiments of the present disclosure.

It is to be understood that the block-level scaling factor(s) corresponding to the difference block(s) is/are determined by the preset upper limit value and the preset lower limit value, and the block-level scaling factor(s) other than the block-level scaling factor(s) corresponding to the difference block(s) among the block-level scaling factors corresponding to the all blocks are taken as the N candidate block-level scaling factor(s), and the first frame-level scaling factor is calculated based on the N candidate block-level scaling factor(s). In this way, the influence of the difference of a few blocks on the calculation of the first frame-level scaling factor is reduced, so that the accuracy of the first frame-level scaling factor is improved, and the encoding accuracy is further improved.

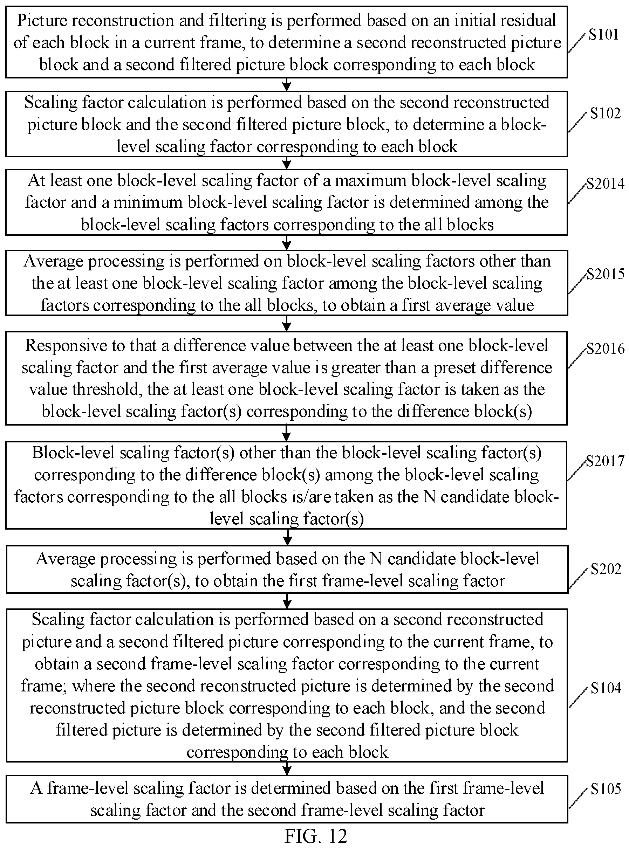

In some embodiments, based on FIG. 10, as illustrated in FIG. 12, the S201 may be implemented through S2014 to S2017, as follows.

S2014, at least one block-level scaling factor of a maximum block-level scaling factor and a minimum block-level scaling factor is determined among the block-level scaling factors corresponding to the all blocks.

In S2014, the encoder traverses the block-level scaling factor corresponding to each block, determines at least one of the maximum block-level scaling factor corresponding to the maximum value and the minimum block-level scaling factor corresponding to the minimum value, to taken as the at least one block-level scaling factor.

Exemplarily, the encoder may determine the maximum block-level scaling factor corresponding to the maximum value among the block-level scaling factors corresponding to all the blocks as the at least one block-level scaling factor; may also determine the minimum block-level scaling factor corresponding to the minimum value among the block-level scaling factors corresponding to all the blocks as the at least one block-level scaling factor; or may also determine the maximum block-level scaling factor and the minimum block-level scaling factor among the block-level scaling factor corresponding to all the blocks as the at least one block-level scaling factor.

S2015, average processing is performed on block-level scaling factors other than the at least one block-level scaling factor among the block-level scaling factors corresponding to the all blocks, to obtain a first average value.

In S2015, the encoder performs average processing on the block-level scaling factors other than the at least one block-level scaling factor among the block-level scaling factors corresponding to the all blocks, to obtain the first average value.

S2016, responsive to that a difference value between the at least one block-level scaling factor and the first average value is greater than a preset difference value threshold, the at least one block-level scaling factor is taken as the block-level scaling factor(s) corresponding to the difference block(s).

In S2016, the encoder calculates the difference between the at least one block-level scaling factor (that is, at least one of the maximum block-level scaling factor or the minimum block-level scaling factor) and the first average value. If the difference is greater than the preset difference value threshold, it is indicated that the maximum block-level scaling factor or the minimum block-level scaling factor has a significant difference with other block-level scaling factors, so the at least one block-level scaling factor is taken as the block-level scaling factor(s) corresponding to the difference block(s).

Exemplarily, if the difference between the maximum block-level scaling factor and the first average value is greater than the preset difference value threshold, the maximum block-level scaling factor is taken as the block-level scaling factor corresponding to the difference block. If the difference between the minimum block-level scaling factor and the first average value is greater than the preset difference value threshold, the minimum block-level scaling factor is taken as the block-level scaling factor corresponding to the difference block. If the difference between the maximum block-level scaling factor and the first average value, and the difference between the minimum block-level scaling factor and the first average value are both greater than the preset difference value threshold, the maximum block-level scaling factor and the minimum block-level scaling factor are both taken as the block-level scaling factors corresponding to the difference blocks.

In some embodiments, the preset difference value threshold may include a preset maximum difference value threshold $TH_{max}$ and a preset minimum difference value threshold $TH_{min}$. The specific selection is made according to the actual situations, which is not limited in the embodiments of the present disclosure..

S2017, block-level scaling factor(s) other than the block-level scaling factor(s) corresponding to the difference block(s) among the block-level scaling factors corresponding to the all blocks is/are taken as the N candidate block-level scaling factor(s).

In S2017, the encoder discards the block-level scaling factor(s) corresponding to the difference block(s) obtained by performing maximum value and minimum value screening from the block-level scaling factors corresponding to the all blocks, to obtain the N candidate block-level scaling factor(s).

In some embodiments, a number of maximum block-level scaling factor(s) or minimum block-level scaling factor(s) may be multiple, for example, there are multiple block-level scaling factors of the maximum value among the block-level scaling factors corresponding to the all blocks. Therefore, after the operation that the at least one block-level scaling factor is taken as the block-level scaling factor(s) corresponding to the difference block(s) in S2016, a second proportion between the number of the block-level scaling factor(s) corresponding to the difference block(s) determined by the at least one of the maximum block-level scaling factor(s) or the minimum block-level scaling factor(s) and the total number of the block-level scaling factors corresponding to the all blocks may be calculated. If the second proportion does not exceed the preset proportion threshold, the maximum block-level scaling factor(s) or the minimum block-level scaling factor(s) is/are taken as the block-level scaling factor(s) corresponding to the difference block(s), and the block-level scaling factor(s) other than the block-level scaling factor(s) corresponding to the difference block(s) among the block-level scaling factors corresponding to the all blocks is/are taken as the N candidate block-level scaling factor(s).

It is to be understood that the block-level scaling factor(s) corresponding to the difference block(s) is/are determined by the maximum scaling factor and the minimum scaling factor, the block-level scaling factor(s) other than the block-level scaling factor(s) corresponding to the difference block(s) among the block-level scaling factors corresponding to the all blocks is/are taken as the N candidate block-level scaling factor(s), and the first frame-level scaling factor is calculated based on the N candidate block-level scaling factor(s). In this way, the influence of the difference of a few blocks on the calculation of the first frame-level scaling factor is reduced, so that the accuracy of the first frame-level scaling factor is improved, and the encoding accuracy is further improved.

S202, average processing is performed based on the N candidate block-level scaling factor(s), to obtain the first frame-level scaling factor.

In S202, the encoder performs average processing based on the N candidate block-level scaling factor(s), to fuse the N candidate block-level scaling factor(s) as the first frame-level scaling factor.

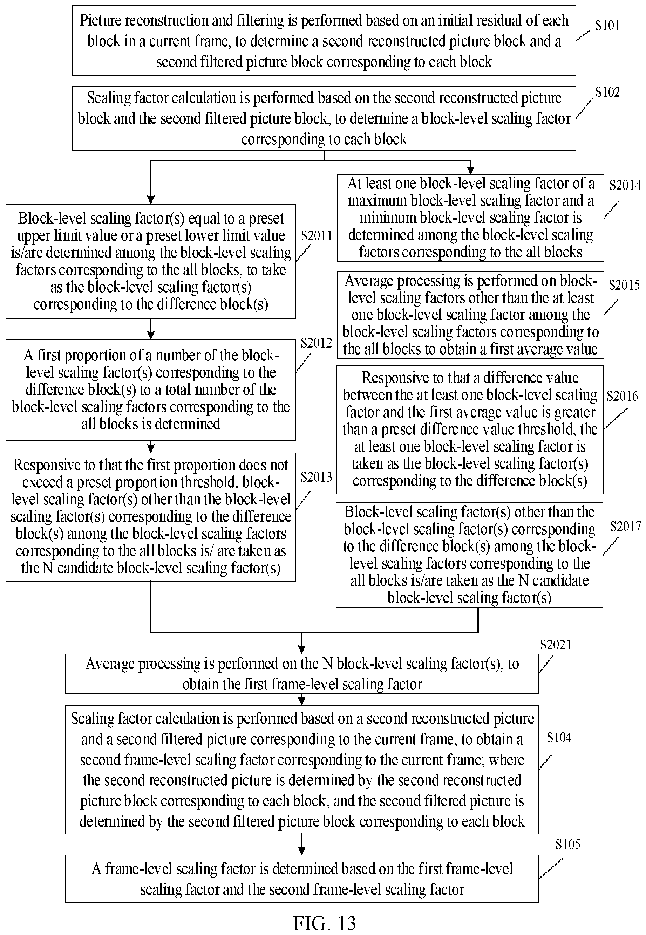

In some embodiments, based on FIG. 11 and FIG. 12, S202 includes S2021 and may be as illustrated in FIG. 13, as follows.

S2021, average processing is performed on the N block-level scaling factor(s), to obtain the first frame-level scaling factor.

In S2021, the encoder may perform average processing on the N candidate block-level scaling factor(s) obtained by performing screening according to the preset upper limit value and the preset lower limit value, to obtain the first frame-level scaling factor; or may perform average processing on the N candidate block-level scaling factor(s) obtained by performing screening according to the maximum block-level scaling factor and the minimum block-level scaling factor, to obtain the first frame-level scaling factor.

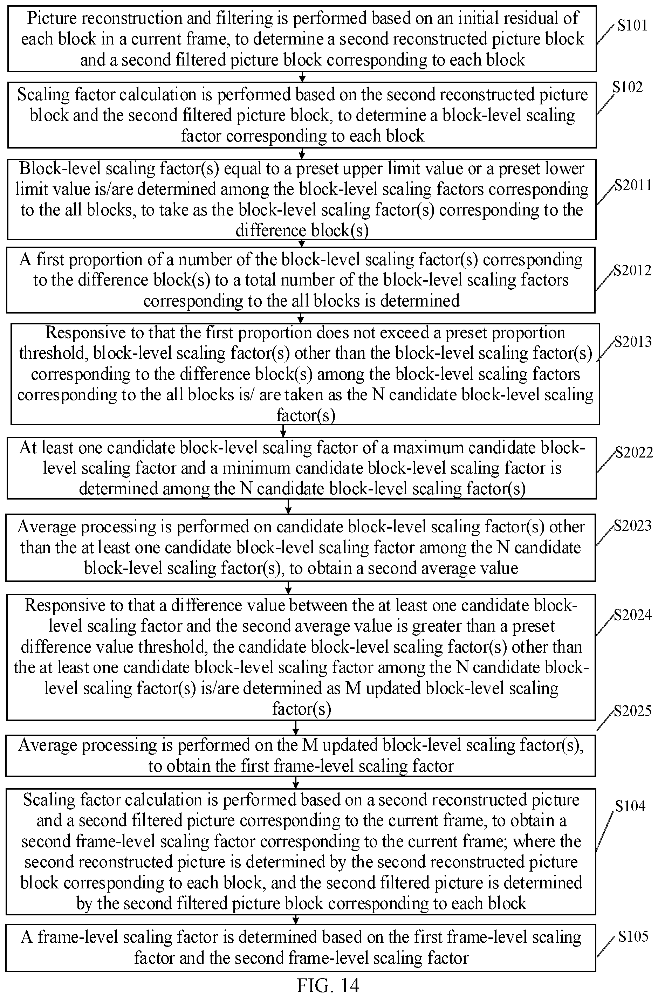

In some embodiments, based on FIG. 11 (that is, based on the operation that the N candidate block-level scaling factor(s) are obtained by performing screening according to the preset upper limit value and the preset lower limit value), the S202 may also be implemented by performing S2022 to S2025 illustrated in FIG. 14, as follows.

S2022, at least one candidate block-level scaling factor of a maximum candidate block-level scaling factor and a minimum candidate block-level scaling factor is determined among the N candidate block-level scaling factor(s).

In S2022, based on the S2013 in FIG. 11, the encoder further performs screening on the N candidate block-level scaling factor(s) obtained by performing screening according to the preset upper limit value and the preset lower limit value, and determines at least one of the maximum candidate block-level scaling factor corresponding to the maximum value or the minimum candidate block-level scaling factor corresponding to the minimum value from the N candidate block-level scaling factor(s) as the at least one candidate block-level scaling factor.

Here, the description of the operation that the encoder determines the at least one candidate block-level scaling factor is determined among the N candidate block-level scaling factor(s) is consistent with that of the above operation that the at least one block-level scaling factor is determined among the block-level scaling factors corresponding to the all blocks, which will not be repeated here.

S2023, average processing is performed on candidate block-level scaling factor(s) other than the at least one candidate block-level scaling factor among the N candidate block-level scaling factor(s), to obtain a second average value.

In S2023, the description of the operation that the encoder performs average processing on the candidate block-level scaling factor(s) other than the at least one candidate block-level scaling factor among the N candidate block-level scaling factor(s) to obtain the second average value is consistent with that of the above operation that the first average value is calculated in the above S2015, which will not be repeated here.

S2024, responsive to that a difference value between the at least one candidate block-level scaling factor and the second average value is greater than a preset difference value threshold, the candidate block-level scaling factor(s) other than the at least one candidate block-level scaling factor among the N candidate block-level scaling factor(s) is/are determined as M updated block-level scaling factor(s).

In S2024, if the difference value between the at least one candidate block-level scaling factor and the second average value is greater than the preset difference value threshold, the encoder takes the at least one candidate block-level scaling factor as the scaling factor(s) corresponding to the difference block(s), and discards the at least one candidate block-level scaling factor among the N candidate block-level scaling factor(s), to obtain the M updated block-level scaling factor(s). That is, the candidate block-level scaling factor(s) other than the at least one candidate block-level scaling factor among the N candidate block-level scaling factor(s) is/are determined as the M updated block-level scaling factor(s). Here, M is a positive integer greater than 0 and less than or equal to N.

S2025, average processing is performed on the M updated block-level scaling factor(s), to obtain the first frame-level scaling factor.

In S2025, the encoder performs average processing on the M updated block-level scaling factor(s) obtained by twice screenings, to obtain the first frame-level scaling factor.

Similarly, in some embodiments, based on FIG. 12 (that is, based on the operation that the N candidate block-level scaling factor(s) are obtained by performing screening according to the maximum block-level scaling factor and the minimum block-level scaling factor), the encoder may further perform screening on the N candidate block-level scaling factor(s) by the preset upper limit value and the preset lower limit value, to obtain the M updated block-level scaling factor(s); and then perform averaging processing on the M updated block-level scaling factor(s), to obtain the first frame-level scaling factor, which will not be repeated here.

It is to be noted that the flows mentioned in FIG. 13 and FIG. 14 are parallel method flows. In actual applications, one of the method flows may be selected to execute according to actual situations, which is not limited in the embodiments of the present disclosure.

It is to be understood that, screening is performed once by the preset upper limit value and the preset lower limit value, and screening is performed on the screened N candidate block-level scaling factor(s) again by the maximum scaling factor and the minimum scaling factor. In this way, the influence of the difference of a few blocks on the calculation of the first frame-level scaling factor is further reduced, the accuracy of the first frame-level scaling factor is improved, and the encoding accuracy is further improved.

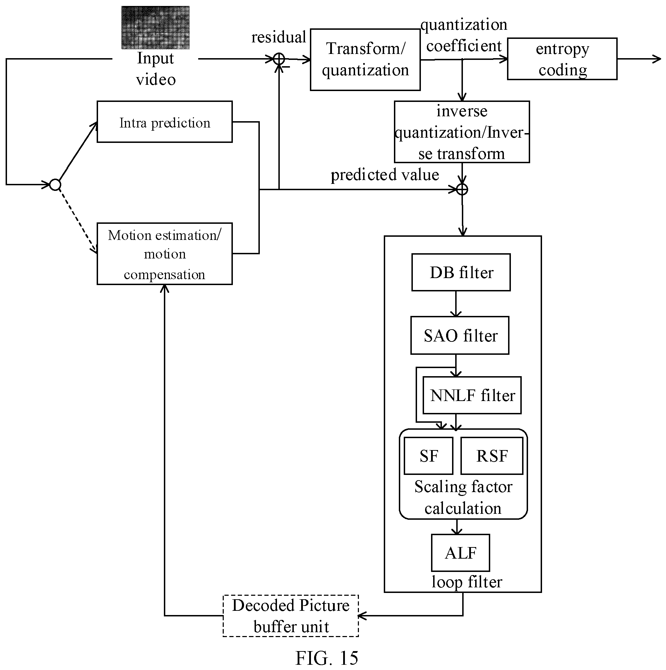

In some embodiments of the embodiments of the present disclosure, as illustrated in FIG. 15, an encoder framework is provided. Neural network based in-loop filter (NNLF) may be implemented by an in-loop filter based on a multi-layer convolutional network or an in-loop filter based on a multi-layer residual network. In FIG. 15, scaling factor calculation is used to determine the second frame-level scaling factor SF and the first frame-level scaling factor RSF, and the frame-level scaling factor is determined based on the SF and the RSF. Enabling of scaling factor calculation does not depend on open or off of DB, SAO, ALF, and NNLF, the scaling factor calculation is placed after NNLF and before ALF.

As illustrated in FIG. 15, when the encoding end enters in-loop filtering, processing is performed according to a pre-given filter sequence; and when the encoding end enters scaling factor calculation, processing processes of scaling factor calculation include: by each block-level encoding process, for each pixel position in each block of the current frame of the current sequence, traversing each color component of each pixel corresponding to each pixel position within each block in each block, the second reconstructed picture block and the second filtered picture block, and calculating the block-level scaling factor corresponding to each block through the formulas (1)-(7). When processing of each block in the current frame is completed, L block-level scaling factors are obtained.

In the process of scaling factor calculation, for the L block-level scaling factors corresponding to the current frame, a derived range of the scaling factors is limited by the block-level scaling factors with the preset upper value and the preset lower limit value, and screening is performed on the L block-level scaling factors once by the derived range. For a j-th block-level scaling factor ctuSF(j) among the L block-level scaling factors, if ctuSF(j) is equal to the preset upper limit value or the preset lower limit value, it is indicated that required refined magnitude of the second reconstructed picture block corresponding to ctuSF(j) has reached the critical value that can be corrected, and the block corresponding to ctuSF(j) is taken as a special block (that is, the difference block). By comparing each of the block-level scaling factors with the preset upper limit value and the preset lower limit value, the proportion of the special block(s) in the L blocks, that is, the first proportion, is determined and counted. If the proportion is less than the preset proportion threshold, the special block(s) is/are discarded from the L block-level scaling factors for the sake of entire picture blocks.

In the process of scaling factor calculation, after completing the screening based on the preset upper limit value and the preset lower limit value, the maximum block-level scaling factor ctuSF_max or the minimum block-level scaling factor ctuSF_min may be obtained by traversing the remaining block-level scaling factors (that is, by traversing at least one candidate block-level scaling factor). Mean calculation is performed on the at least one candidate block-level scaling factor to obtain the second average value. If the difference between ctuSF_max or ctuSF_min and the second average value exceeds the preset difference value threshold, the block corresponding to ctuSF_max or ctuSF_min is regarded as a special block. For the sake of entire picture blocks, the special block is discarded from the at least one candidate block-level scaling factor, to obtain the updated block-level scaling factor set ctuSF_SET (that is, the M updated block-level scaling factors). Averaging is performed on the ctuSF_SET to obtain the first frame-level scaling factor RSF.

In the process of scaling factor calculation, based on each pixel position in the current frame, each color component of each pixel corresponding to each pixel position of each block in the current frame, the second reconstructed picture and the second filtered picture is traversed, to calculate the second frame-level scaling factor SF corresponding to the current frame. The residuals of the second reconstructed picture and the second filtered picture are refined by using SF and RSF, respectively, to obtain the first refined picture corresponding to RSF and the second refined picture corresponding to SF. The first refined picture and the second refined picture are compared with the original picture, to calculate the costs, respectively. Exemplarily, the first distortion cost D_RSF corresponding to RSF and the second distortion cost D_SF corresponding to SF are obtained. By comparing D_RSF and D_SF are, if D_RSF is less than or equals to D_SF (i.e., D_RSF<=D_SF), RSF is taken as the scaling factor ultimately used by the current color component of the current frame. If D_RSF is greater than D_SF (i.e., D_RSF>D_SF), SF is taken as the scaling factor ultimately used, and the selected scaling factor is encoded into the bitstream. If the calculation of the scaling factor has been completed for the current frame, the next frame is loaded for processing.

In some embodiments, under the general test condition (random access, RA) configuration, the applicant performed tests on partial datasets in the JVET-specified general sequence Class D WQVGA by using a network model integrated with the scaling factor calculation method of the present disclosure. The test is based on the VTM11.0-nnve reference platform, the above preset proportion threshold is configured as $TH_{bottom} = TH_{up} = 10\%$, and the preset difference value threshold is configured as $TH_{min} = TH_{max} = 0.5$. According to the test results, compared with the network model in the related art, the network model integrated with the scaling factor calculation method of the present disclosure has improved RA performance for each color component Y, U, and V, as shown in Table 1 (the data in Table 1 is negatively correlated with the RA performance):

Table 1

| Test Dataset | Y Component | U Component | V Component |
|---|---|---|---|
| BasketballPass | 0.00% | -0.19% | 0.03% |
| BQSquare | 0.01% | -0.22% | -0.29% |
| BlowingBubbles | 0.02% | -0.22% | 0.04% |
| RaceHorese | -0.01% | -0.10% | -0.15% |

It can be seen from the Table 1, compared with the network model in the related art, for different test datasets, the network model integrated with the scaling factor calculation module of the present disclosure has significant improvement on U and V components, where the performance on the U component is improved by -0.19%, -0.22%, -0.22% and -0.10%; and the performance on the V component improved by -0.29% and -0.15%. This data indicated that the encoding and decoding performance is improved, and the accuracy of encoding and decoding is improved.

It is to be understood that, according to the embodiments of the present disclosure, by considering the differences between various block-level scaling factors, the influence of a few special blocks on the calculation of the frame-level scaling factor is reduced, so that the optimized frame-level scaling factor ultimately derived (that is, the first frame-level scaling factor) is more suitable for most of the picture blocks to perform the scaling processing. The residuals of the reconstructed picture and the neural network in-loop filtering picture are refined by using the first frame-level scaling factor, so that the refined picture may be closer to the original picture, to obtain better coding performance. In addition, the scaling factor calculation method of the embodiments of the present disclosure is merely operated at the encoding end, the calculated first frame-level scaling factor is at picture-level, an thus, there is no need to consume encoding bits and no effect on the decoding complexity. By introducing the optimization method for the scaling factor of the embodiments of the present disclosure, it is possible to have significant coding performance improvement based on the neural network in-loop filter. In practical applications, the performance may be further improved by optimizing the algorithm and setting the threshold value.

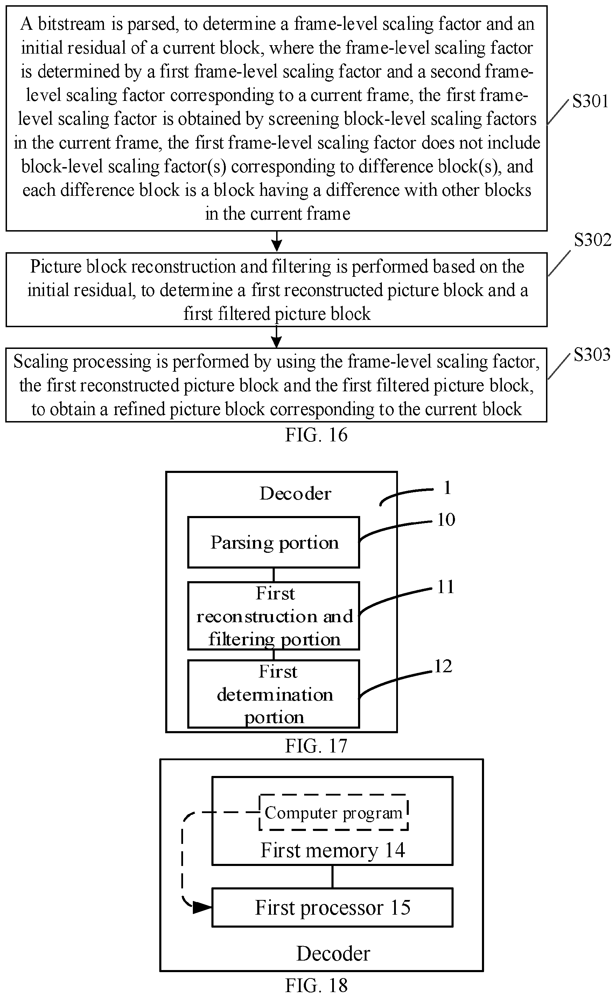

The embodiments of the present disclosure provide a filtering method, which is applied to a decoder. FIG. 16 is an optional flowchart schematic diagram of a filtering method provided in the embodiments of the present disclosure, including S301 to S303, as follows.

S301, a bitstream is parsed, to determine a frame-level scaling factor and an initial residual of a current block, where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not include block-level scaling factor(s) corresponding to difference block(s), and each difference block is a block having a difference with other blocks in the current frame.

In S301, the decoder receives and parses the bitstream, to obtain the frame-level scaling factor corresponding to the current frame, and performs picture reconstruction, by the current block in the current frame, such as, inverse transformation and inverse quantization, to obtain the initial residual of the current block in the current frame. Here, the frame-level scaling factor is determined by comparing distortion cost corresponding to the first frame-level scaling factor and distortion cost corresponding to the second frame-level scaling factor corresponding to the current frame, according to the above encoder filtering method. The first frame-level scaling factor is obtained by screening the block-level scaling factors in the current frame and fusing the screened block-level scaling factor(s). Here, the screened block-level scaling factor do not include the block-level scaling factor(s) corresponding to difference block(s); and the difference block(s) is/are a block having a difference with other blocks in the current frame. Therefore, the first frame-level scaling factor does not include the block-level scaling factor(s) corresponding to difference block(s).

S302, picture block reconstruction and filtering is performed based on the initial residual, to determine a first reconstructed picture block and a first filtered picture block.

In S302, the decoder performs picture block reconstruction based on the initial residual, and obtains the first reconstructed picture block by superimposing the initial residual to a predicted picture block obtained by prediction. The decoder performs filtering on the first reconstructed picture block, to obtain the first filtered picture block.

In some embodiments, the decoder performs picture block reconstruction on the initial residual, to obtain a first initial reconstructed picture block; performs deblocking filtering on the first initial reconstructed picture block, to obtain a first deblocked picture block; and performs sample adaptive offset filtering on the first deblocked picture block, to obtain the first reconstructed picture block. The encoder performs in-loop filtering on the first reconstructed picture block, to obtain the first filtered picture block.

S303, scaling processing is performed by using the frame-level scaling factor, the first reconstructed picture block and the first filtered picture block, to obtain a refined picture block corresponding to the current block.

In S303, the decoder determines a first reconstructed pixel and a first filtered pixel corresponding to each pixel position based on the first reconstructed picture block and the first filtered picture block; performs scaling processing on the first reconstructed pixel and the first filtered pixel by using the frame-level scaling factor, to determine a refined pixel corresponding to each pixel position; and determins the refined picture block according to the refined pixel corresponding to each pixel position.

In some embodiments, the decoder may determine, for each pixel position, a first pixel residual between the first reconstructed pixel and the first filtered pixel; and performs scaling processing on the first pixel residual by using the frame-level scaling factor and superposing with the first reconstructed pixel, to obtain the refined pixel corresponding to each pixel position.

In some embodiments, the decoder may perform scaling processing on the first reconstructed pixel by using a difference value between the frame-level scaling factor and a preset coefficient, to obtain a first reconstructed refined pixel; perform scaling processing on the first filtered pixel by using the frame-level scaling factor, to obtain a first filtered refined pixel; and combines the first reconstructed refined pixel with the first filtered refined pixel, to obtain the refined pixel.

In some embodiments of the present disclosure, the frame-level scaling factor includes: a respective frame-level scaling factor corresponding to each color component. For each pixel position, the decoder performs, according to the respective frame-level scaling factor corresponding to each color component, scaling processing on a first pixel of the first reconstructed pixel on each color component and a second pixel of the first filtered pixel on each color component, to obtain a respective refined pixel corresponding to each color component.

In the embodiments of the present disclosure, the decoder may further perform picture block reconstruction and filtering on a next block in the current frame; perform scaling processing on a first reconstructed picture block and a first filtered picture block of the next block by using the frame-level scaling factor, to obtain a refined picture block corresponding to the next block until processing of the current frame is completed; and obtain a first filtered picture of the current frame according to a refined picture block corresponding to each block in the current frame, that is, a video picture signal output by the filtering unit at the decoder side.

Optionally, after the operation that scaling processing is performed by using the frame-level scaling factor, the first reconstructed picture block and the first filtered picture block to obtain the refined picture block corresponding to the current block, the decoder may further perform adaptive filtering on the refined picture block, to obtain a second filtered picture block; and continues to perform filtering processing on a next block in the current frame, to obtain a second filtered picture block corresponding to the next block until processing of the current frame is completed; and obtains a first filtered picture of the current frame according to a second filtered picture block corresponding to each block in the current frame.

It is to be noted that the filtering method at the decoder side provided by the embodiments of the present disclosure is applied to the filtering unit at the decoder side. The description of the above related steps at the decoder side is consistent with the description of the corresponding steps performed by the filtering unit at the encoder side, which will not be repeated here.

It is to be understood that the frame-level scaling factor parsed from the bitstream at the decoder side is determined by the first frame-level scaling factor and the second frame-level scaling factor corresponding to the current frame. The first frame-level scaling factor is obtained by screening the block-level scaling factors in the current frame, and does not include the block-level scaling factor(s) corresponding to the difference block(s). Thus, the error caused by the block-level scaling factor(s) corresponding to the difference block(s) on the calculation of the entire frame-level scaling factor is reduced, so that the calculated first frame-level scaling factor may more accurately characterize the required refined magnitude of most blocks in the current frame, thereby improving the accuracy of the first frame-level scaling factor. Moreover, since the frame-level scaling factor is determined in the first frame-level scaling factor and the second frame-level scaling factor by comparing the two types of frame-level scaling factors, the distortion correction performance of the frame-level scaling factor is further improved, the accuracy of performing filtering on the current block by using the frame-level shrinkage factor to obtain the refined picture block is improved, thereby further improving the decoding performance and the decoding accuracy.

Based on the implementation basis of the above embodiments, as illustrated in FIG. 17, the embodiments of the present disclosure provides a decoder 1, which includes:

a parsing portion 10, configured to parse a bitstream, to determine a frame-level scaling factor and an initial residual of a current block; where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not include block-level scaling factor(s) corresponding to difference block(s), and each difference block is a block having a difference with other blocks in the current frame;

a first reconstruction and filtering portion 11, configured to perform picture block reconstruction and filtering based on the initial residual, to determine a first reconstructed picture block and a first filtered picture block; and

a first determination portion 12, configured to perform scaling processing by using the frame-level scaling factor, the first reconstructed picture block and the first filtered picture block, to obtain a refined picture block corresponding to the current block.

In some embodiments of the present disclosure, the first determination portion 12 is further configured to determine a first reconstructed pixel and a first filtered pixel corresponding to each pixel position based on the first reconstructed picture block and the first filtered picture block; perform scaling processing on the first reconstructed pixel and the first filtered pixel by using the frame-level scaling factor, to determine a refined pixel corresponding to each pixel position; and determine the refined picture block according to the refined pixel corresponding to each pixel position.

In some embodiments of the present disclosure, the first determination portion 12 is further configured to determine, for each pixel position, a first pixel residual between the first reconstructed pixel and the first filtered pixel; and perform scaling processing on the first pixel residual by using the frame-level scaling factor and superpose with the first reconstructed pixel, to obtain the refined pixel corresponding to each pixel position.

In some embodiments of the present disclosure, the first determination portion 12 is further configured to perform scaling processing on the first reconstructed pixel by using a difference value between the frame-level scaling factor and a preset coefficient, to obtain a first reconstructed refined pixel; perform scaling processing on the first filtered pixel by using the frame-level scaling factor, to obtain a first filtered refined pixel; and combine the first reconstructed refined pixel with the first filtered refined pixel, to obtain the refined pixel.

In some embodiments of the present disclosure, the frame-level scaling factor includes: a respective frame-level scaling factor corresponding to each color component; the first determination portion 12 is further configured to perform, for each pixel position according to the respective frame-level scaling factor corresponding to each color component, scaling processing on a first pixel of the first reconstructed pixel on each color component and a second pixel of the first filtered pixel on each color component, to obtain a respective refined pixel corresponding to each color component.

In some embodiments of the present disclosure, the first reconstruction and filtering portion 11 is further configured to perform picture block reconstruction based on the initial residual, to obtain the first reconstructed picture block; and perform filtering on the first reconstructed picture block, to obtain the first filtered picture block.

In some embodiments of the present disclosure, the first reconstruction and filtering portion 11 is further configured to perform picture block reconstruction on the initial residual, to obtain a first initial reconstructed picture block; perform deblocking filtering on the first initial reconstructed picture block, to obtain a first deblocked picture block; and perform sample adaptive offset filtering on the first deblocked picture block, to obtain the first reconstructed picture block.

In some embodiments of the present disclosure, after scaling processing is performed by using the frame-level scaling factor, the first reconstructed picture block and the first filtered picture block, to obtain the refined picture block corresponding to the current block, the parsing portion 10, the first reconstruction and filtering portion 11 and the first determination portion 12 are further configured to perform picture block reconstruction and filtering on a next block in the current frame; perform scaling processing on a first reconstructed picture block and a first filtered picture block of the next block by using the frame-level scaling factor, to obtain a refined picture block corresponding to the next block until processing of the current frame is completed; and obtain a first filtered picture of the current frame according to a refined picture block corresponding to each block in the current frame.

In some embodiments of the present disclosure, the decoder 1 further includes a first adaptive filtering portion. The first adaptive filtering portion is configured to perform adaptive filtering on the refined picture block, to obtain a second filtered picture block; and continue to perform filtering processing on a next block in the current frame, to obtain a second filtered picture block corresponding to the next block until processing of the current frame is completed; and obtain a first filtered picture of the current frame according to a second filtered picture block corresponding to each block in the current frame.

In the actual applications of the present disclosure, as illustrated in FIG. 18, the embodiments of the present disclosure further provides a decoder, which includes:

a first memory 14 and a first processor 15;

where the first memory 14 is configured to store a computer program executable on the first processor 15; and the first processor 15 is configured to implement the filtering method corresponding to the decoder when executing the computer program.

The first processor 15 may be implemented by software, hardware, firmware, or a combination thereof, and may use circuitry, single or multiple application specific integrated circuits (ASICs), single or multiple general purpose integrated circuits, single or multiple microprocessors, single or multiple programmable logic devices, or combinations of the aforementioned circuitry or devices, or other suitable circuitry or devices, so that the first processor 15 may perform corresponding steps of the filtering method at the decoder side in the aforementioned embodiments.

It is to be noted that the description of the above decoder embodiments is similar to that of the above method embodiments, and has similar beneficial effects as the method embodiments. For technical details not disclosed in the decoder embodiments of the present invention, refer to the description of the method embodiments of the present disclosure for understanding.

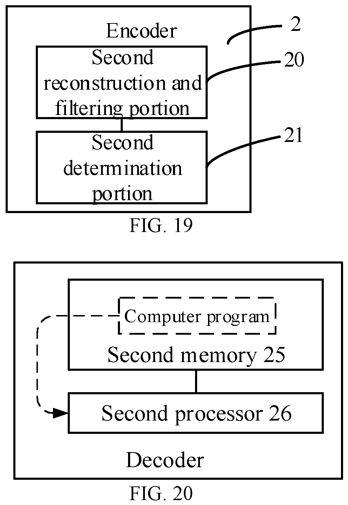

The embodiments of the present disclosure provides an encoder 2, as illustrated in FIG. 19, which includes:

a second reconstruction and filtering portion 20, configured to perform picture reconstruction and filtering based on an initial residual of each block in a current frame, to determine a second reconstructed picture block and a second filtered picture block corresponding to each block; and

a second determination portion 21, configured to perform scaling factor calculation based on the second reconstructed picture block and the second filtered picture block, to determine a block-level scaling factor corresponding to each block; perform screening on block-level scaling factors corresponding to all blocks in the current frame, to determine a first frame-level scaling factor, where the first frame-level scaling factor does not include block-level scaling factor(s) corresponding to difference block(s), and each difference block is a block having a difference with other blocks in the current frame; perform scaling factor calculation based on a second reconstructed picture and a second filtered picture corresponding to the current frame, to obtain a second frame-level scaling factor corresponding to the current frame, where the second reconstructed picture is determined by the second reconstructed picture block corresponding to each block, and the second filtered picture is determined by the second filtered picture block corresponding to each block; and determine a frame-level scaling factor based on the first frame-level scaling factor and the second frame-level scaling factor.

In some embodiments of the present disclosure, the second determination portion 21 is further configured to perform boundary value screening on the block-level scaling factors corresponding to the all blocks, to obtain N candidate block-level scaling factor(s); where N is a positive integer greater than 0; and perform average processing based on the N candidate block-level scaling factor(s), to obtain the first frame-level scaling factor.

In some embodiments of the present disclosure, the second determination portion 21 is further configured to determine block-level scaling factor(s) equal to a preset upper limit value or a preset lower limit value among the block-level scaling factors corresponding to the all blocks, to take as the block-level scaling factor(s) corresponding to the difference block(s); determine a first proportion of a number of the block-level scaling factor(s) corresponding to the difference block(s) to a total number of the block-level scaling factors corresponding to the all blocks; and responsive to that the first proportion does not exceed a preset proportion threshold, take block-level scaling factor(s) other than the block-level scaling factor(s) corresponding to the difference block(s) among the block-level scaling factors corresponding to the all blocks as the N candidate block-level scaling factor(s).

In some embodiments of the present disclosure, the second determination portion 21 is further configured to determine at least one block-level scaling factor of a maximum block-level scaling factor and a minimum block-level scaling factor among the block-level scaling factors corresponding to the all blocks; perform average processing on block-level scaling factor(s) other than the at least one block-level scaling factor among the block-level scaling factors corresponding to the all blocks, to obtain a first average value; responsive to that a difference value between the at least one block-level scaling factor and the first average value is greater than a preset difference value threshold, take the at least one block-level scaling factor as the block-level scaling factor(s) corresponding to the difference block(s); and take block-level scaling factor(s) other than the block-level scaling factor(s) corresponding to the difference block(s) among the block-level scaling factors corresponding to the all blocks as the N candidate block-level scaling factor(s).

In some embodiments of the present disclosure, the second determination portion 21 is further configured to determine at least one candidate block-level scaling factor of a maximum candidate block-level scaling factor and a minimum candidate block-level scaling factor among the N candidate block-level scaling factor(s);

perform average processing on candidate block-level scaling factor(s) other than the at least one candidate block-level scaling factor among the N candidate block-level scaling factor(s), to obtain a second average value; responsive to that a difference value between the at least one candidate block-level scaling factor and the second average value is greater than a preset difference value threshold, determine the candidate block-level scaling factor(s) other than the at least one candidate block-level scaling factor among the N candidate block-level scaling factor(s) as M updated block-level scaling factor(s), where M is greater than 0 and less than or equal to N; and perform average processing on the M updated block-level scaling factor(s), to obtain the first frame-level scaling factor.

In some embodiments of the present disclosure, the second determination portion 21 is further configured to perform scaling processing on the second reconstructed picture and the second filtered picture by using the first frame-level scaling factor, to obtain a first refined picture;

perform scaling processing on the second reconstructed picture and the second filtered picture by using the second frame-level scaling factor, to obtain a second refined picture; determine distortion cost between the first refined picture and the current frame and distortion cost between the second refined picture and the current frame, to obtain first distortion cost corresponding to the first frame-level scaling factor and second distortion cost corresponding to the second frame-level scaling factor, respectively; and determine the frame-level scaling factor from the first frame-level scaling factor and the second frame-level scaling factor by comparing the first distortion cost with the second distortion cost.

In some embodiments of the present disclosure, the second determination portion 21 is further configured to determine the first frame-level scaling factor as the frame-level scaling factor responsive to that the first distortion cost is less than or equal to the second distortion cost; or determine the second frame-level scaling factor as the frame-level scaling factor responsive to that the first distortion cost is greater than the second distortion cost.

In some embodiments of the present disclosure, the second determination portion 21 is further configured to determine, according to an original pixel corresponding to each pixel position in each block, an original pixel residual between the original pixel and a second reconstructed pixel of the second reconstructed picture block; determine, according to a second filtered pixel corresponding to each pixel position in the second filtered picture block, a filtered pixel residual between the second filtered pixel and the second reconstructed pixel; determine a block-level original pixel residual and a block-level filtered pixel residual corresponding to each block based on the original pixel residual and the filtered pixel residual; and perform weighting processing based on the block-level original pixel residual and the block-level filtered pixel residual, to obtain the block-level scaling factor corresponding to each block.

In some embodiments of the present disclosure, the second determination portion 21 is further configured to perform weighting and fusing on filtered pixel residuals corresponding to all pixel positions in each block, to determine a first block-level weighted residual corresponding to each block; perform weighting and fusing on original pixel residuals corresponding to all pixel positions in each block and the filtered pixel residuals, to determine a second block-level weighted residual corresponding to each block; and perform, in combination with a preset upper limit value and a preset lower limit value, least squares processing on the first block-level weighted residual, the second block-level weighted residual, the block-level original pixel residual and the block-level filtered pixel residual, to obtain the block-level scaling factor corresponding to each block.

In some embodiments of the present disclosure, the second determination portion 21 is further configured to traverse an original pixel residual corresponding to each pixel position in the second reconstructed picture, to determine a frame-level original pixel residual, where the original pixel residual corresponding to each pixel position in the second reconstructed picture is obtained based on an original pixel residual corresponding to each pixel position in the second reconstructed picture block corresponding to each block; traverse a filtered pixel residual corresponding to each pixel position in the second filtered picture, to determine a frame-level filtered pixel residual, where the filtered pixel residual corresponding to each pixel position in the second filtered picture is obtained based on a filtered pixel residual corresponding to each pixel position in the second filtered picture block; perform weighting and fusing on filtered pixel residuals corresponding to all pixel positions in the second filtered picture, to obtain a first frame-level weighted residual; perform weighting and fusing on the filtered pixel residual corresponding to the all pixel positions in the second filtered picture and original pixel residuals corresponding to all pixel positions in the second reconstructed picture, to obtain a second frame-level weighted residual; and perform, in combination with a preset upper limit value and a preset lower limit value, least squares processing on the first frame-level weighted residual, the second frame-level weighted residual, the frame-level original pixel residual and the frame-level filtered pixel residual, to obtain the second frame-level scaling factor.

In some embodiments of the present disclosure, the first frame-level scaling factor includes a respective first frame-level scaling factor corresponding to each color component; and the second determination portion 21 is further configured to perform, for each pixel position in the second reconstructed picture and the second filtered picture according to the respective first frame-level scaling factor corresponding to each color component, scaling and superposing processing on a first reconstructed pixel of each second reconstructed pixel in the second reconstructed picture on each color component and a second filtered pixel of each second filtered pixel in the second filtered picture on each color component, to obtain a first refined pixel corresponding to each pixel position and containing each color component; and traverse the first refined pixel corresponding to each pixel position, to obtain the first refined picture.

In some embodiments of the present disclosure, the second reconstruction and filtering portion 22 is further configured to perform picture reconstruction and filtering on an initial residual of a current block in the current frame, to obtain a second reconstructed picture block and a second filtered picture block corresponding to the current block, and continue to perform picture block reconstruction and filtering on a next block in the current frame until processing of the current frame is completed, to obtain the second reconstructed picture block and the second filtered picture block corresponding to each block.

In some embodiments of the present disclosure, the second reconstruction and filtering portion 22 is further configured to perform picture reconstruction on the initial residual of the current block, to obtain the second reconstructed picture block; and perform filtering on the second reconstructed picture block, to obtain the second filtered picture block.

In some embodiments of the present disclosure, the encoder 2 further includes a filtering picture output portion. The filtering picture output portion is configured to obtain the second filtered picture corresponding to the current frame based on the second filtered picture block corresponding to each block, after picture reconstruction and filtering is performed based on the initial residual of each block in the current frame to determine the second reconstructed picture block and the second filtered picture block corresponding to each block.

In some embodiments of the present disclosure, after picture reconstruction and filtering is performed on the initial residual of each block in the current frame to obtain the second reconstructed picture block and the second filtered picture block corresponding to each block, the filtering picture output portion is further configured to perform adaptive filtering on the second filtered picture block corresponding to each block, to obtain an adaptive filtered picture block corresponding to each block; and traverse the adaptive filtered picture block corresponding to each block, to obtain the second filtered picture corresponding to the current frame.

In the actual applications, as illustrated in FIG. 20, the embodiments of the present disclosure further provides an encoder, which includes:

a second memory 25 and a second processor 26;
where the second memory 25 is configured to store a computer program executable on the second processor 26; and the first processor 26 is configured to implement the filtering method corresponding to the encoder when executing the computer program.

It is to be noted that the description of the above encoder embodiments is similar to that of the above method embodiments, and has similar beneficial effects as the method embodiments. For technical details not disclosed in the encoder embodiments of the present invention, refer to the description of the method embodiments of the present disclosure for understanding.

The embodiments of the present disclosure provide a computer-readable storage medium, where the computer-readable storage medium stores a computer program. The computer program, when executed by the first processor, implements the filtering method of the decoder according to the claims; or the computer program, when executed by the second processor, implements the filtering method of the encoder according to the claims.

The various components in various embodiments of the present application may be integrated into one processing unit, or each unit may be physically present, or two or more units may be integrated into one unit. The above-mentioned integrated unit can be implemented in the form of hardware or a software functional unit.

The integrated unit may be stored in a computer readable storage when it is implemented in the form of a software functional unit and is sold or used as a separate product. Based on such understanding, the technical solutions of the embodiments essentially, or the part of the technical solutions that contributes to the related art, or all or part of the technical solutions, may be embodied in the form of a software product which is stored in a storage medium and includes instructions for causing a computer device (which may be a personal computer, a server, or a network device and so on) or a processor to perform all or part of the steps described in the various embodiments of the present application. The above storage medium includes various media that can store program codes, such as ferromagnetic random access memory (FRAM), read-only memory (ROM), programmable read-only memory (PROM), erasable programmable read-only memory (EPROM), electrically erasable programmable read-only memory (EEPROM), flash memory, magnetic surface memory, an optical disc, or compact disc read-only memory (CD-ROM, which is not limited in the implementations of the present application.

The foregoing are merely specific implementations of the present disclosure, but the protection scope of the present disclosure is not limited thereto. Any person skilled in the art may readily conceive variations or substitutions within the technical scope disclosed by the present disclosure, which should be included within the protection scope of the present disclosure. Therefore, the protection scope of the present disclosure shall be subject to the protection scope of the claims.

INDUSTRIAL APPLICABILITY

The embodiments of the present disclosure provide a filtering method, a decoder, an encoder, and a computer-readable storage medium. The frame-level scaling factor parsed from the bitstream at the decoder side is determined by the first frame-level scaling factor and the second frame-level scaling factor corresponding to the current frame. The first frame-level scaling factor is obtained by screening the block-level scaling factors in the current frame, and does not include the block-level scaling factor(s) corresponding to the difference block(s). Thus, the error caused by the block-level scaling factor(s) corresponding to the difference block(s) on the calculation of the entire frame-level scaling factor is reduced, so that the calculated first frame-level scaling factor may more accurately characterize the required refined magnitude of most blocks in the current frame, thereby improving the accuracy of the first frame-level scaling factor. Moreover, since the frame-level scaling factor is determined in the first frame-level scaling factor and the second frame-level scaling factor by comparing the two types of frame-level scaling factors, the distortion correction performance of the frame-level scaling factor is further improved, the accuracy of performing filtering on the current block by using the frame-level shrinkage factor to obtain the refined picture block is improved, thereby further improving the decoding performance and the decoding accuracy.

In addition, the encoder performs picture reconstruction and filtering based on the initial residual of each block in the current frame, to determine the second reconstructed picture block and the second filtered picture block corresponding to each block; performs scaling factor calculation within the picture block range based on the second reconstructed picture block and the second filtered picture block, to determine the block-level scaling factor corresponding to each block. Then, screening is performed on the block-level scaling factors corresponding to the all blocks corresponding to the current frame, to determine the first frame-level scaling factor, so that the first frame-level scaling factor does not include the block-level scaling factor corresponding to the difference block, thereby reducing the influence caused by the block-level scaling factor corresponding to the difference block in the current frame on the calculation of the frame-level scaling factor of the entire picture, and improving the accuracy of the first frame-level scaling factor. The first frame-level scaling factor is compared with the second frame-level scaling factor calculated within the picture-level range, to determine the frame-level scaling factor from the first frame-level scaling factor and the second frame-level scaling factor, the distortion correction performance of the frame-level scaling factor is improved, so that the encoding performance is improved, and the encoding accuracy is improved ultimately. Moreover, since the first frame-level scaling factor is obtained by performing fusing on the screened block-level scaling factors, there is no need to consume extra coding bits when the first frame-level scaling factor is encoded into the bitstream for transmission, the encoding performance and accuracy are improved while ensuring that the encoding efficiency is not reduced. Furthermore, when screening the scaling factor corresponding to the difference block, screening is performed once by the preset upper limit value and the preset lower limit value, and screening is performed on the screened N candidate block-level scaling factors again by the maximum scaling factor and the minimum scaling factor. In this way, the influence of the difference of a few blocks on the calculation of the first frame-level scaling factor is further reduced, the accuracy of the first frame-level scaling factor is improved, and the encoding accuracy is further improved.

## Claims

1.  A filtering method, applied to a decoder and comprising:

    parsing a bitstream, to determine a frame-level scaling factor and an initial residual of a current block, wherein the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not comprise block-level scaling factor(s) corresponding to difference block(s), and each difference block is a block having a difference with other blocks in the current frame;
    performing picture block reconstruction and filtering based on the initial residual, to determine a first reconstructed picture block and a first filtered picture block; and
    performing scaling processing by using the frame-level scaling factor, the first reconstructed picture block and the first filtered picture block, to obtain a refined picture block corresponding to the current block.

2.  The method according to claim 1, wherein performing scaling processing by using the frame-level scaling factor, the first reconstructed picture block and the first filtered picture block, to obtain the refined picture block corresponding to the current block comprises:

    determining a first reconstructed pixel and a first filtered pixel corresponding to each pixel position based on the first reconstructed picture block and the first filtered picture block;
    performing scaling processing on the first reconstructed pixel and the first filtered pixel by using the frame-level scaling factor, to determine a refined pixel corresponding to each pixel position; and
    determining the refined picture block according to the refined pixel corresponding to each pixel position.

3.  The method according to claim 2, wherein performing scaling processing on the first reconstructed pixel and the first filtered pixel by using the frame-level scaling factor, to determine the refined pixel corresponding to each pixel position comprises:

    determining a first pixel residual between the first reconstructed pixel and the first filtered pixel for each pixel position; and
performing scaling processing on the first pixel residual by using the frame-level scaling factor and superposing with the first reconstructed pixel, to obtain the refined pixel corresponding to each pixel position.

4. The method according to claim 2, wherein performing scaling processing on the first reconstructed pixel and the first filtered pixel by using the frame-level scaling factor, to determine the refined pixel corresponding to each pixel position comprises:

performing scaling processing on the first reconstructed pixel by using a difference value between the frame-level scaling factor and a preset coefficient, to obtain a first reconstructed refined pixel;
performing scaling processing on the first filtered pixel by using the frame-level scaling factor, to obtain a first filtered refined pixel; and
combining the first reconstructed refined pixel with the first filtered refined pixel, to obtain the refined pixel.

5. The method according to claim 2, wherein the frame-level scaling factor comprises: a respective frame-level scaling factor corresponding to each color component; and
performing scaling processing on the first reconstructed pixel and the first filtered pixel by using the frame-level scaling factor, to determine the refined pixel corresponding to each pixel position comprises:
for each pixel position, performing, according to the respective frame-level scaling factor corresponding to each color component, scaling processing on a first pixel of the first reconstructed pixel on each color component and a second pixel of the first filtered pixel on each color component, to obtain a respective refined pixel corresponding to each color component.

6. The method according to any one of claims 1 to 5, wherein performing picture block reconstruction and filtering based on the initial residual, to determine the first reconstructed picture block and the first filtered picture block comprises:

performing picture block reconstruction based on the initial residual, to obtain the first reconstructed picture block; and
performing filtering on the first reconstructed picture block, to obtain the first filtered picture block.

7. The method according to claim 6, wherein performing picture block reconstruction based on the initial residual, to obtain the first reconstructed picture block comprises:

performing picture block reconstruction on the initial residual, to obtain a first initial reconstructed picture block;
performing deblocking filtering on the first initial reconstructed picture block, to obtain a first deblocked picture block; and
performing sample adaptive offset filtering on the first deblocked picture block, to obtain the first reconstructed picture block.

8. The method according to any one of claims 1 to 5 or 7, wherein after performing scaling processing by using the frame-level scaling factor, the first reconstructed picture block and the first filtered picture block, to obtain the refined picture block corresponding to the current block, the method further comprises:
performing picture block reconstruction and filtering on a next block in the current frame; performing scaling processing on a first reconstructed picture block and a first filtered picture block of the next block by using the frame-level scaling factor, to obtain a refined picture block corresponding to the next block until processing of the current frame is completed; and obtaining a first filtered picture of the current frame according to a refined picture block corresponding to each block in the current frame.

9. The method according to any one of claims 1 to 5 or 7, wherein after performing scaling processing by using the frame-level scaling factor, the first reconstructed picture block and the first filtered picture block, to obtain the refined picture block corresponding to the current block, the method further comprises:

performing adaptive filtering on the refined picture block, to obtain a second filtered picture block; and
continuing to perform filtering processing on a next block in the current frame, to obtain a second filtered picture block corresponding to the next block until processing of the current frame is completed; and obtaining a first filtered picture of the current frame according to a second filtered picture block corresponding to each block in the current frame.

10. A filtering method, applied to an encoder and comprising:

performing picture reconstruction and filtering based on an initial residual of each block in a current frame, to determine a second reconstructed picture block and a second filtered picture block corresponding to each block; performing scaling factor calculation based on the second reconstructed picture block and the second filtered picture block, to determine a block-level scaling factor corresponding to each block; performing screening on block-level scaling factors corresponding to all blocks in the current frame, to determine a first frame-level scaling factor, wherein the first frame-level scaling factor does not comprise block-level scaling factor(s) corresponding to difference block(s), and each difference block is a block having a difference with other blocks in the current frame; performing scaling factor calculation based on a second reconstructed picture and a second filtered picture corresponding to the current frame, to obtain a second frame-level scaling factor corresponding to the current frame, wherein the second reconstructed picture is determined by the second reconstructed picture block corresponding to each block, and the second filtered picture is determined by the second filtered picture block corresponding to each block; and determining a frame-level scaling factor based on the first frame-level scaling factor and the second frame-level scaling factor.

11. The method according to claim 10, wherein performing screening on the block-level scaling factors corresponding to the all blocks in the current frame, to determine the first frame-level scaling factor comprises:

performing boundary value screening on the block-level scaling factors corresponding to the all blocks, to obtain N candidate block-level scaling factor(s); wherein N is a positive integer greater than 0; and performing average processing based on the N candidate block-level scaling factor(s), to obtain the first frame-level scaling factor.

12. The method according to claim 11, wherein performing boundary value screening on the block-level scaling factors corresponding to the all blocks, to obtain the N candidate block-level scaling factor(s) comprises:

determining block-level scaling factor(s) equal to a preset upper limit value or a preset lower limit value among the block-level scaling factors corresponding to the all blocks, to take as the block-level scaling factor(s) corresponding to the difference block(s); determining a first proportion of a number of the block-level scaling factor(s) corresponding to the difference block(s) to a total number of the block-level scaling factors corresponding to the all blocks; and responsive to that the first proportion does not exceed a preset proportion threshold, taking block-level scaling factor(s) other than the block-level scaling factor(s) corresponding to the difference block(s) among the block-level scaling factors corresponding to the all blocks as the N candidate block-level scaling factor(s).

13. The method according to claim 11, wherein performing boundary value screening on the block-level scaling factors corresponding to the all blocks, to obtain the N candidate block-level scaling factor(s) comprises:

determining at least one block-level scaling factor of a maximum block-level scaling factor and a minimum block-level scaling factor among the block-level scaling factors corresponding to the all blocks; performing average processing on block-level scaling factor(s) other than the at least one block-level scaling factor among the block-level scaling factors corresponding to the all blocks, to obtain a first average value; responsive to that a difference value between the at least one block-level scaling factor and the first average value is greater than a preset difference value threshold, taking the at least one block-level scaling factor as the block-level scaling factor(s) corresponding to the difference block(s); and taking block-level scaling factor(s) other than the block-level scaling factor(s) corresponding to the difference block(s) among the block-level scaling factors corresponding to the all blocks as the N candidate block-level scaling factor(s).

14. The method according to claim 12, wherein performing average processing based on the N candidate block-level scaling factor(s), to obtain the first frame-level scaling factor comprises:

determining at least one candidate block-level scaling factor of a maximum candidate block-level scaling factor and a minimum candidate block-level scaling factor among the N candidate block-level scaling factor(s); performing average processing on candidate block-level scaling factor(s) other than the at least one candidate block-level scaling factor among the N candidate block-level scaling factor(s), to obtain a second average value; responsive to that a difference value between the at least one candidate block-level scaling factor and the second average value is greater than a preset difference value threshold, determining the candidate block-level scaling factor(s) other than the at least one candidate block-level scaling factor among the N candidate block-level scaling factor(s) as M updated block-level scaling factor(s), wherein M is greater than 0 and less than or equal to N; and performing average processing on the M updated block-level scaling factor(s), to obtain the first frame-level scaling factor.

15. The method according to any one of claims 10 to 14, wherein determining the frame-level scaling factor based on the first frame-level scaling factor and the second frame-level scaling factor comprises:

   performing scaling processing on the second reconstructed picture and the second filtered picture by using the first frame-level scaling factor, to obtain a first refined picture;
   performing scaling processing on the second reconstructed picture and the second filtered picture by using the second frame-level scaling factor, to obtain a second refined picture;
   determining distortion cost between the first refined picture and the current frame and distortion cost between the second refined picture and the current frame, to obtain first distortion cost corresponding to the first frame-level scaling factor and second distortion cost corresponding to the second frame-level scaling factor, respectively; and
   determining the frame-level scaling factor from the first frame-level scaling factor and the second frame-level scaling factor by comparing the first distortion cost with the second distortion cost.

16. The method according to claim 15, wherein determining the frame-level scaling factor from the first frame-level scaling factor and the second frame-level scaling factor by comparing the first distortion cost with the second distortion cost comprises:

   responsive to that the first distortion cost is less than or equal to the second distortion cost, determining the first frame-level scaling factor as the frame-level scaling factor; or
   responsive to that the first distortion cost is greater than the second distortion cost, determining the second frame-level scaling factor as the frame-level scaling factor.

17. The method according to any one of claims 10 to 14 or 16, wherein performing scaling factor calculation based on the second reconstructed picture block and the second filtered picture block, to determine the block-level scaling factor corresponding to each block comprises:

   determining, according to an original pixel corresponding to each pixel position in each block, an original pixel residual between the original pixel and a second reconstructed pixel of the second reconstructed picture block;
   determining, according to a second filtered pixel corresponding to each pixel position in the second filtered picture block, a filtered pixel residual between the second filtered pixel and the second reconstructed pixel;
   determining a block-level original pixel residual and a block-level filtered pixel residual corresponding to each block based on the original pixel residual and the filtered pixel residual; and
   performing weighting processing based on the block-level original pixel residual and the block-level filtered pixel residual, to obtain the block-level scaling factor corresponding to each block.

18. The method according to claim 17, wherein performing weighting processing based on the block-level original pixel residual and the block-level filtered pixel residual, to obtain the block-level scaling factor corresponding to each block comprises:

   performing weighting and fusing on filtered pixel residuals corresponding to all pixel positions in each block, to determine a first block-level weighted residual corresponding to each block;
   performing weighting and fusing on original pixel residuals corresponding to all pixel positions in each block and the filtered pixel residuals, to determine a second block-level weighted residual corresponding to each block; and
   performing, in combination with a preset upper limit value and a preset lower limit value, least squares processing on the first block-level weighted residual, the second block-level weighted residual, the block-level original pixel residual and the block-level filtered pixel residual, to obtain the block-level scaling factor corresponding to each block.

19. The method according to any one of claims 10 to 14 or 16, wherein performing scaling factor calculation based on the second reconstructed picture and the second filtered picture corresponding to the current frame, to obtain the second frame-level scaling factor corresponding to the current frame comprises:

traversing an original pixel residual corresponding to each pixel position in the second reconstructed picture, to determine a frame-level original pixel residual, wherein the original pixel residual corresponding to each pixel position in the second reconstructed picture is obtained based on an original pixel residual corresponding to each pixel position in the second reconstructed picture block corresponding to each block;

traversing a filtered pixel residual corresponding to each pixel position in the second filtered picture, to determine a frame-level filtered pixel residual, wherein the filtered pixel residual corresponding to each pixel position in the second filtered picture is obtained based on a filtered pixel residual corresponding to each pixel position in the second filtered picture block;

performing weighting and fusing on filtered pixel residuals corresponding to all pixel positions in the second filtered picture, to obtain a first frame-level weighted residual;

performing weighting and fusing on the filtered pixel residual corresponding to the all pixel positions in the second filtered picture and original pixel residuals corresponding to all pixel positions in the second reconstructed picture, to obtain a second frame-level weighted residual; and

performing, in combination with a preset upper limit value and a preset lower limit value, least squares processing on the first frame-level weighted residual, the second frame-level weighted residual, the frame-level original pixel residual and the frame-level filtered pixel residual, to obtain the second frame-level scaling factor.

20. The method according to claim 15, wherein the first frame-level scaling factor comprises a respective first frame-level scaling factor corresponding to each color component; and

performing scaling processing on the second reconstructed picture block and the second filtered picture block by using the first frame-level scaling factor, to obtain the first refined picture comprises:

for each pixel position in the second reconstructed picture and the second filtered picture, performing, according to the respective first frame-level scaling factor corresponding to each color component, scaling and superposing processing on a first reconstructed pixel of each second reconstructed pixel in the second reconstructed picture on each color component and a second filtered pixel of each second filtered pixel in the second filtered picture on each color component, to obtain a first refined pixel corresponding to each pixel position and containing each color component; and

traversing the first refined pixel corresponding to each pixel position, to obtain the first refined picture.

21. The method according to any one of claims 10 to 14, 16, 18 or 20, wherein performing picture reconstruction and filtering based on the initial residual of each block in the current frame, to determine the second reconstructed picture block and the second filtered picture block corresponding to each block comprises:

performing picture reconstruction and filtering on an initial residual of a current block in the current frame, to obtain a second reconstructed picture block and a second filtered picture block corresponding to the current block, and continuing to perform picture block reconstruction and filtering on a next block in the current frame until processing of the current frame is completed, to obtain the second reconstructed picture block and the second filtered picture block corresponding to each block.

22. The method according to claim 21, wherein performing picture reconstruction and filtering on the initial residual of the current block in the current frame, to obtain the second reconstructed picture block and the second filtered picture block corresponding to the current block comprises:

performing picture reconstruction on the initial residual of the current block, to obtain the second reconstructed picture block; and

performing filtering on the second reconstructed picture block, to obtain the second filtered picture block.

23. The method according to any one of claims 10-14, 16, 18 or 20-22, wherein after performing picture reconstruction and filtering based on the initial residual of each block in the current frame, to determine the second reconstructed picture block and the second filtered picture block corresponding to each block, the method further comprises:

obtaining the second filtered picture corresponding to the current frame based on the second filtered picture block corresponding to each block.

24. The method according to any one of claims 10-14, 16, 18 or 20-22, wherein after performing picture reconstruction and filtering based on the initial residual of each block in the current frame, to determine the second reconstructed picture block and the second filtered picture block corresponding to each block, the method further comprises:

performing adaptive filtering on the second filtered picture block corresponding to each block, to obtain an adaptive filtered picture block corresponding to each block; and traversing the adaptive filtered picture block corresponding to each block, to obtain the second filtered picture corresponding to the current frame.

25. A decoder, comprising:

a parsing portion, configured to parse a bitstream, to determine a frame-level scaling factor and an initial residual of a current block; wherein the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not comprise block-level scaling factor(s) corresponding to difference block(s), and each difference block is a block having a difference with other blocks in the current frame;
a first reconstruction and filtering portion, configured to perform picture block reconstruction and filtering based on the initial residual, to determine a first reconstructed picture block and a first filtered picture block; and
a first determination portion, configured to perform scaling processing by using the frame-level scaling factor, the first reconstructed picture block and the first filtered picture block, to obtain a refined picture block corresponding to the current block.

26. An encoder, comprising:

a second reconstruction and filtering portion, configured to perform picture reconstruction and filtering based on an initial residual of each block in a current frame, to determine a second reconstructed picture block and a second filtered picture block corresponding to each block; and
a second determination portion, configured to perform scaling factor calculation based on the second reconstructed picture block and the second filtered picture block, to determine a block-level scaling factor corresponding to each block; perform screening on block-level scaling factors corresponding to all blocks in the current frame, to determine a first frame-level scaling factor, wherein the first frame-level scaling factor does not comprise block-level scaling factor(s) corresponding to difference block(s), and each difference block is a block having a difference with other blocks in the current frame; perform scaling factor calculation based on a second reconstructed picture and a second filtered picture corresponding to the current frame, to obtain a second frame-level scaling factor corresponding to the current frame, wherein the second reconstructed picture is determined by the second reconstructed picture block corresponding to each block, and the second filtered picture is determined by the second filtered picture block corresponding to each block; and determine a frame-level scaling factor based on the first frame-level scaling factor and the second frame-level scaling factor.

27. A decoder, comprising:

a first memory and a first processor;
wherein the first memory is configured to store a computer program executable on the first processor; and the first processor is configured to implement, the method according to any one of claims 1 to 9 when executing the computer program.

28. An encoder, comprising:

a second memory and a second processor;
wherein the second memory is configured to store a computer program executable on the second processor; and the second processor is configured to implement the method according to any one of claims 10 to 24 when executing the computer program.

29. A computer-readable storage medium, wherein the computer-readable storage medium stores a computer program, when executed by a first processor, implements the method according to any one of claims 1 to 9, or the computer program, when executed by a second processor, implements the method according to any one of claims 10 to 24.

FIG. 1

FIG. 2

FIG. 3

FIG. 4

FIG. 5

| 0.1 | 0.2 | 0.1 | **0.9** |
|-----|-----|-----|-----|
| 0.3 | 0.1 | 0.2 | 0.2 |

FIG. 6A

| 0.1 | 0.2 | 0.1 | **0.2** |
|-----|-----|-----|-----|
| 0.3 | 0.1 | 0.2 | 0.2 |

FIG. 6B

Input video

Partitioned into
coding blocks

Transform and
quantization unit ~101

~100

Quantized transform coefficient

Inverse transform
and inverse
quantization unit ~106

Filter control
analyzing unit ~107

Filter
control
data

Coding unit ~109

Output
bitstream

Intra estimation
unit ~102

Intra prediction
unit ~103

Filtering unit ~108

Intra
prediction
data

Inter/intra
selection

Motion
compensation unit ~104

Motion data

Motion
estimation unit ~105

Decoded
picture buffer ~110

Output video
signal

FIG. 7A

FIG. 7B

Picture reconstruction and filtering is performed based on an initial residual of each block in a current frame, to determine a second reconstructed picture block and a second filtered picture block corresponding to each block

S101

Scaling factor calculation is performed based on the second reconstructed picture block and the second filtered picture block, to determine a block-level scaling factor corresponding to each block

S102

Screening is performed on block-level scaling factors corresponding to all blocks in the current frame, to determine a first frame-level scaling factor; where the first frame-level scaling factor does not include block-level scaling factor(s) corresponding to difference block(s), and each difference block is a block having a difference with other blocks in the current frame

S103

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block

S104

A frame-level scaling factor is determined based on the first frame-level scaling factor and the second frame-level scaling factor

S105

FIG. 8

Picture reconstruction and filtering is performed based on an initial residual of each block in a current frame, to determine a second reconstructed picture block and a second filtered picture block corresponding to each block
S101

Scaling factor calculation is performed based on the second reconstructed picture block and the second filtered picture block, to determine a block-level scaling factor corresponding to each block
S102

Screening is performed on block-level scaling factors corresponding to all blocks in the current frame, to determine a first frame-level scaling factor; where the first frame-level scaling factor does not include block-level scaling factor(s) corresponding to difference block(s), and each difference block is a block having a difference with other blocks in the current frame
S103

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block
S104

Scaling processing is performed on the second reconstructed picture and the second filtered picture by using the first frame-level scaling factor, to obtain a first refined picture; and scaling processing is performed on the second reconstructed picture and the second filtered picture by using the second frame-level scaling factor, to obtain a second refined picture
S1051

Distortion cost between the first refined picture and the current frame and distortion cost between the second refined picture and the current frame are determined, to obtain first distortion cost corresponding to the first frame-level scaling factor and second distortion cost corresponding to the second frame-level scaling factor, respectively
S1052

The frame-level scaling factor is determined from the first frame-level scaling factor and the second frame-level scaling factor by comparing the first distortion cost with the second distortion cost
S1053

FIG. 9

Picture reconstruction and filtering is performed based on an initial residual of each block in a current frame, to determine a second reconstructed picture block and a second filtered picture block corresponding to each block

S101

Scaling factor calculation is performed based on the second reconstructed picture block and the second filtered picture block, to determine a block-level scaling factor corresponding to each block

S102

Boundary value screening is performed on the block-level scaling factors corresponding to the all blocks, to obtain N candidate block-level scaling factor(s)

S201

Average processing is performed based on the N candidate block-level scaling factor(s), to obtain the first frame-level scaling factor

S202

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block

S104

A frame-level scaling factor is determined based on the first frame-level scaling factor and the second frame-level scaling factor

S105

FIG. 10

Picture reconstruction and filtering is performed based on an initial residual of each block in a current frame, to determine a second reconstructed picture block and a second filtered picture block corresponding to each block — S101

Scaling factor calculation is performed based on the second reconstructed picture block and the second filtered picture block, to determine a block-level scaling factor corresponding to each block — S102

Block-level scaling factor(s) equal to a preset upper limit value or a preset lower limit value is/are determined among the block-level scaling factors corresponding to the all blocks, to take as the block-level scaling factor(s) corresponding to the difference block(s) — S2011

A first proportion of a number of the block-level scaling factor(s) corresponding to the difference block(s) to a total number of the block-level scaling factors corresponding to the all blocks is determined — S2012

Responsive to that the first proportion does not exceed a preset proportion threshold, block-level scaling factor(s) other than the block-level scaling factor(s) corresponding to the difference block(s) among the block-level scaling factors corresponding to the all blocks is/ are taken as the N candidate block-level scaling factor(s) — S2013

Average processing is performed based on the N candidate block-level scaling factor(s), to obtain the first frame-level scaling factor — S202

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block — S104

A frame-level scaling factor is determined based on the first frame-level scaling factor and the second frame-level scaling factor — S105

FIG. 11

Picture reconstruction and filtering is performed based on an initial residual of each block in a current frame, to determine a second reconstructed picture block and a second filtered picture block corresponding to each block — S101

↓

Scaling factor calculation is performed based on the second reconstructed picture block and the second filtered picture block, to determine a block-level scaling factor corresponding to each block — S102

↓

At least one block-level scaling factor of a maximum block-level scaling factor and a minimum block-level scaling factor is determined among the block-level scaling factors corresponding to the all blocks — S2014

↓

Average processing is performed on block-level scaling factors other than the at least one block-level scaling factor among the block-level scaling factors corresponding to the all blocks, to obtain a first average value — S2015

↓

Responsive to that a difference value between the at least one block-level scaling factor and the first average value is greater than a preset difference value threshold, the at least one block-level scaling factor is taken as the block-level scaling factor(s) corresponding to the difference block(s) — S2016

↓

Block-level scaling factor(s) other than the block-level scaling factor(s) corresponding to the difference block(s) among the block-level scaling factors corresponding to the all blocks is/are taken as the N candidate block-level scaling factor(s) — S2017

↓

Average processing is performed based on the N candidate block-level scaling factor(s), to obtain the first frame-level scaling factor — S202

↓

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block — S104

↓

A frame-level scaling factor is determined based on the first frame-level scaling factor and the second frame-level scaling factor — S105

FIG. 12

Picture reconstruction and filtering is performed based on an initial residual of each block in a current frame, to determine a second reconstructed picture block and a second filtered picture block corresponding to each block — S101

Scaling factor calculation is performed based on the second reconstructed picture block and the second filtered picture block, to determine a block-level scaling factor corresponding to each block — S102

Block-level scaling factor(s) equal to a preset upper limit value or a preset lower limit value is/are determined among the block-level scaling factors corresponding to the all blocks, to take as the block-level scaling factor(s) corresponding to the difference block(s) — S2011

A first proportion of a number of the block-level scaling factor(s) corresponding to the difference block(s) to a total number of the block-level scaling factors corresponding to the all blocks is determined — S2012

Responsive to that the first proportion does not exceed a preset proportion threshold, block-level scaling factor(s) other than the block-level scaling factor(s) corresponding to the difference block(s) among the block-level scaling factors corresponding to the all blocks is/ are taken as the N candidate block-level scaling factor(s) — S2013

At least one block-level scaling factor of a maximum block-level scaling factor and a minimum block-level scaling factor is determined among the block-level scaling factors corresponding to the all blocks — S2014

Average processing is performed on block-level scaling factors other than the at least one block-level scaling factor among the block-level scaling factors corresponding to the all blocks to obtain a first average value — S2015

Responsive to that a difference value between the at least one block-level scaling factor and the first average value is greater than a preset difference value threshold, the at least one block-level scaling factor is taken as the block-level scaling factor(s) corresponding to the difference block(s) — S2016

Block-level scaling factor(s) other than the block-level scaling factor(s) corresponding to the difference block(s) among the block-level scaling factors corresponding to the all blocks is/are taken as the N candidate block-level scaling factor(s) — S2017

Average processing is performed on the N block-level scaling factor(s), to obtain the first frame-level scaling factor — S2021

Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block — S104

A frame-level scaling factor is determined based on the first frame-level scaling factor and the second frame-level scaling factor — S105

FIG. 13

| | |
|---|---|
| Picture reconstruction and filtering is performed based on an initial residual of each block in a current frame, to determine a second reconstructed picture block and a second filtered picture block corresponding to each block | S101 |
| Scaling factor calculation is performed based on the second reconstructed picture block and the second filtered picture block, to determine a block-level scaling factor corresponding to each block | S102 |
| Block-level scaling factor(s) equal to a preset upper limit value or a preset lower limit value is/are determined among the block-level scaling factors corresponding to the all blocks, to take as the block-level scaling factor(s) corresponding to the difference block(s) | S2011 |
| A first proportion of a number of the block-level scaling factor(s) corresponding to the difference block(s) to a total number of the block-level scaling factors corresponding to the all blocks is determined | S2012 |
| Responsive to that the first proportion does not exceed a preset proportion threshold, block-level scaling factor(s) other than the block-level scaling factor(s) corresponding to the difference block(s) among the block-level scaling factors corresponding to the all blocks is/ are taken as the N candidate block-level scaling factor(s) | S2013 |
| At least one candidate block-level scaling factor of a maximum candidate block-level scaling factor and a minimum candidate block-level scaling factor is determined among the N candidate block-level scaling factor(s) | S2022 |
| Average processing is performed on candidate block-level scaling factor(s) other than the at least one candidate block-level scaling factor among the N candidate block-level scaling factor(s), to obtain a second average value | S2023 |
| Responsive to that a difference value between the at least one candidate block-level scaling factor and the second average value is greater than a preset difference value threshold, the candidate block-level scaling factor(s) other than the at least one candidate block-level scaling factor among the N candidate block-level scaling factor(s) is/are determined as M updated block-level scaling factor(s) | S2024 |
| Average processing is performed on the M updated block-level scaling factor(s), to obtain the first frame-level scaling factor | S2025 |
| Scaling factor calculation is performed based on a second reconstructed picture and a second filtered picture corresponding to the current frame, to obtain a second frame-level scaling factor corresponding to the current frame; where the second reconstructed picture is determined by the second reconstructed picture block corresponding to each block, and the second filtered picture is determined by the second filtered picture block corresponding to each block | S104 |
| A frame-level scaling factor is determined based on the first frame-level scaling factor and the second frame-level scaling factor | S105 |

FIG. 14

FIG. 15

A bitstream is parsed, to determine a frame-level scaling factor and an initial residual of a current block, where the frame-level scaling factor is determined by a first frame-level scaling factor and a second frame-level scaling factor corresponding to a current frame, the first frame-level scaling factor is obtained by screening block-level scaling factors in the current frame, the first frame-level scaling factor does not include block-level scaling factor(s) corresponding to difference block(s), and each difference block is a block having a difference with other blocks in the current frame

S301

Picture block reconstruction and filtering is performed based on the initial residual, to determine a first reconstructed picture block and a first filtered picture block

S302

Scaling processing is performed by using the frame-level scaling factor, the first reconstructed picture block and the first filtered picture block, to obtain a refined picture block corresponding to the current block

S303

FIG. 16

Decoder — 1

Parsing portion — 10

First reconstruction and filtering portion — 11

First determination portion — 12

FIG. 17

Computer program

First memory 14

First processor 15

Decoder

FIG. 18

Encoder 2

Second reconstruction and filtering portion 20

Second determination portion 21

FIG. 19

Computer program

Second memory 25

Second processor 26

Decoder

FIG. 20

## INTERNATIONAL SEARCH REPORT

| International application No. |
| --- |
| **PCT/CN2022/099527** |

**A. CLASSIFICATION OF SUBJECT MATTER**

H04N19/117(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, VEN, USTXT, WOTXT, CNKI, JVET: 滤波, 伸缩, 缩放, 因子, 图像, 帧, 残差, 块, 编码单元, filter, scaling, factor, image, frame, residual, block, CU

**C. DOCUMENTS CONSIDERED TO BE RELEVANT**

| Category* | Citation of document, with indication, where appropriate, of the relevant passages | Relevant to claim No. |
| --- | --- | --- |
| A | CN 114025164 A (ZHEJIANG DAHUA TECHNOLOGY CO., LTD.) 08 February 2022 (2022-02-08) description, paragraph [0141] | 1-29 |
| A | CN 112655212 A (GUANGDONG OPPO MOBILE COMMUNICATIONS CO., LTD.) 13 April 2021 (2021-04-13) entire document | 1-29 |
| A | CN 114365490 A (BEIJING BYTEDANCE NETWORK TECHNOLOGY CO., LTD. et al.) 15 April 2022 (2022-04-15) entire document | 1-29 |
| A | US 2017006283 A1 (MICROSOFT TECHNOLOGY LICENSING LLC.) 05 January 2017 (2017-01-05) entire document | 1-29 |
| A | US 2022103816 A1 (QUALCOMM INC.) 31 March 2022 (2022-03-31) entire document | 1-29 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 February 2023** | **21 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/099527**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022071847 A1 (TELEFONAKTIEBOLAGET LM ERICSSON (PUBL)) 07 April 2022 (2022-04-07)<br>    entire document | 1-29 |

Form PCT/ISA/210 (second sheet) (July 2022)

**INTERNATIONAL SEARCH REPORT**
Information on patent family members

| International application No. |
|---|
| **PCT/CN2022/099527** |

| Patent document cited in search report | | | Publication date (day/month/year) | Patent family member(s) | | | Publication date (day/month/year) |
|---|---|---|---|---|---|---|---|
| CN | 114025164 | A | 08 February 2022 | None | | | |
| CN | 112655212 | A | 13 April 2021 | WO | 2020107288 | A1 | 04 June 2020 |
| CN | 114365490 | A | 15 April 2022 | WO | 2021047540 | A1 | 18 March 2021 |
| | | | | US | 2022191492 | A1 | 16 June 2022 |
| US | 2017006283 | A1 | 05 January 2017 | WO | 2017003978 | A1 | 05 January 2017 |
| US | 2022103816 | A1 | 31 March 2022 | TW | 202213996 | A | 01 April 2022 |
| | | | | WO | 2022072239 | A1 | 07 April 2022 |
| WO | 2022071847 | A1 | 07 April 2022 | None | | | |

Form PCT/ISA/210 (patent family annex) (July 2022)